# EUROPEAN PATENT SPECIFICATION

(11) **EP 3 702 418 B1**
(45) Date of publication and mention of the grant of the patent: **25.01.2023**
(21) Application number: 20160458.4
(22) Date of filing: 17.10.2014
(51) Int. Cl.: C09D 11/101, C09D 11/30, C22C 29/08, B22F 3/10, B28B 1/00, B29C 67/04, B29C 64/112, B33Y 10/00, B33Y 30/00

(54) **METHODS AND SYSTEMS FOR PRINTING 3D OBJECT BY INKJET**
VERFAHREN UND SYSTEME ZUM DRUCKEN VON 3D-OBJEKTEN DURCH TINTENSTRAHLDRUCK
PROCÉDÉS ET SYSTÈMES D'IMPRESSION TRIDIMENSIONNELLE D'OBJETS PAR JET D'ENCRE

(30) Priority: 17.10.2013 US 201361891926 P
(43) Date of publication of application: 02.09.2020
(62) Divisional of application: 14853860.6
(73) Proprietor: Xjet Ltd., 76701 Rehovot (IL)
(72) Inventor: GOTHAIT, Hanan, 76230 Rehovot (IL); KRITCHMAN, Eli, 69012 Tel Aviv (IL); BENICHOU, Axel, 53419 Givatayim (IL); SHMAL, Timofey, Holon 5830627 (IL); EYTAN, Guy, 70795 Kidron (IL); SALALHA, Wael, 24990 Beit Gan (IL); DAYAGI, Yohai, 8496300 Hanegev (IL); KODINETS, Oleg, 59563 Bat Yam (IL); LAVID, Lior, 75708 Rishon Lezion (IL)
(74) Representative: Finnegan Europe LLP

(56) References cited:
- US-A1- 2010 040 767

## Description

### FIELD OF THE INVENTION

The present invention generally relates to 3D (three-dimensional) printing.

### BACKGROUND OF THE INVENTION

The 3D (three-dimensional) printing market is maturing rapidly (2014). 3D printing or additive manufacturing (AM) is any of various processes for making a 3D object of almost any shape from a 3D model or other electronic data source primarily through additive processes in which successive layers of material are laid down under computer control. A 3D printer is a type of industrial robot.

Conventional processes include stereo lithography employing UV lasers to cure photopolymers, inkjet printers utilizing UV lamps to cure photopolymers, metal sintering (such as selective laser sintering and direct metal laser sintering), plastic extrusion technology, and deposition of liquid binder on powder.

3D printing is used in applications such as product development, data visualization, rapid prototyping, specialized manufacturing, and production (job production, mass production, and distributed manufacturing). Fields of use are many, including architecture, construction (AEC), industrial design, automotive, aerospace, military, engineering, dental and medical industries, biotech (human tissue replacement), fashion, footwear, jewelry, eyewear, education, geographic information systems, food, and many other fields.

US 2010/040767 discloses a process for producing three-dimensional shaped ceramic bodies by layerwise printing of a suspension.

### SUMMARY

The present invention is defined by the claims. Embodiments of the description not falling under the claims are only for illustrative purposes.

According to the teachings of the present embodiment there is provided a method for printing an object including the steps of:
(a) printing a first layer of at least one ink, each of the at least one ink including:
   (i) a liquid carrier having a carrier boiling point temperature (T1);
   (ii) a dispersant having a dispersant boiling point temperature (T2); and
   (iii) particles having a particle sintering temperature (T3),
(b) while maintaining a temperature of the first layer (TL) in a pre-defined range of temperatures via use of an electro-magnetic (EM) radiation source above the object, wherein said pre-defined range of temperatures is above a lower-bound ([T1]) of the carrier boiling point temperature and below an upper-bound ([T2]) of the dispersant boiling point temperature ([T1] < TL< [T2]), thus evaporating the carrier while the dispersant remains in the first layer, and wherein the first layer is flattened with a leveling apparatus after said carrier has evaporated,
(c) printing a subsequent layer of said at least one ink on said first layer of at least one ink,
(d) building the object by repeating steps (a) to (c),
(e) after steps (a)-(d), heating the object in an oven to evaporate organic material,
(f) after step (e), heating the object to a further elevated temperature where full sintering occurs.

In an optional embodiment, the printing is via at least one printing head jetting the at least one ink. In another optional embodiment, at least one of the printing heads is modulated according to a content of the first layer.

The carrier is a liquid. In another optional embodiment, the particles are a material used to construct the object and dispersed in the carrier liquid, and the dispersant is dissolved in the carrier liquid, adhere to the particles' surface, and inhibit agglomeration of the particles to each other.

The method includes a step of evaporating the carrier prior to the step of evaporating at least a portion of the dispersant. In another optional embodiment, the dispersant binds the particles to each other after the carrier is evaporated. In another optional embodiment, the dispersant inhibits sintering of the particles to each other after the carrier is evaporated. In another optional embodiment, the printing is selective, printing to areas that are part of the first layer of the object. In another optional embodiment, the object is printed on a tray made of a thermal isolation material.

In another optional embodiment, a temperature of the upper surface (TS) of the object is at least 4% higher than the carrier boiling point temperature T1, thereby creating a porous structure in the object's printed lattice. In another optional embodiment, the lower-bound ([T1]) includes 20% less than the carrier boiling point temperature (T1) in degrees Kelvin. In another optional embodiment, the upper-bound ([T2]) is 20% more or less than the dispersant boiling point temperature (T2) in degrees Kelvin.

The step of maintaining is via use of an electro-magnetic (EM) radiation source above the obj ect.

In another optional embodiment, the printing is selective, printing to areas that are part of the first layer of the object and the EM radiation source is non-selective, irradiating an entire area on which the object is being printed.

The process includes a step of: printing a subsequent layer of the at least one ink on the first layer of at least one ink.

In another optional embodiment, the printing is selective, printing to areas that are part of the first layer of the object and the EM radiation source is non-selective, irradiating an entire area on which the object is being printed.

In another optional embodiment, at least two inks are printed, each of the at least two inks including particles of different types, and a local proportion of each of the at least two inks is determined by the first layer's specification.

In another optional embodiment, the particles are selected from a group consisting of: metal; metal oxides; metal carbides; metal alloys; inorganic salts; polymeric particles; Polyolefin; and poly (4-methyl 1-pentene).

In another optional embodiment, a catalyst is added to the first layer. In another optional embodiment, the catalyst is added via a technique selected from the group consisting of: including the catalyst in at least one of the inks; jetting the catalyst in gaseous form from above the first layer; jetting the catalyst in liquid form from above the first layer; spraying the catalyst in gaseous form from above the first layer; and spraying the catalyst in liquid form from above the first layer.

In another optional embodiment, the catalyst is selected from the group consisting of: a halide compound; and a copper chloride compound.

A system (not according to the invention) for printing an object is disclosed including: at least one printing head configured to print a first layer of at least one ink, each of the at least one ink including: a carrier having a carrier boiling point temperature (T1); a dispersant having a dispersant boiling point temperature (T2); and particles having a particle sintering temperature (T3), a controller configured to maintain a temperature of the first layer (TL) in a pre-defined range of temperatures, wherein the pre-defined range of temperatures is above a lower-bound ([T1]) of the carrier boiling point temperature and below an upper-bound ([T2]) of the dispersant boiling point temperature ([T1] < TL< [T2]), thus evaporating the carrier while the dispersant remains in the first layer.

A system (not according to the invention) for printing an object is disclosed including: at least one printing head configured to print a first layer of at least one ink, each of the at least one ink including: a carrier having a carrier boiling point temperature (T1); a dispersant having a dispersant boiling point temperature (T2); and particles having a particle sintering temperature (T3), a controller configured for: evaporating at least a portion of the dispersant; and subsequent operation selected from the group consisting of: at least partially sintering the first layer; and repeating step (a) by printing a subsequent layer of the at least one ink on the first layer.

In an optional embodiment, at least one of the printing heads is an ink-jet head configured to print the at least one ink via jetting. In another optional embodiment, at least one of the printing heads is modulated according to a content of the first layer.

The carrier is a liquid. In another optional embodiment, the particles are a material used to construct the object and dispersed in the carrier liquid; and the dispersant is dissolved in the carrier liquid, adhere to the particles' surface, and inhibit agglomeration of the particles to each other.

In another optional embodiment, the printing is selective, printing to areas that are part of the first layer of the object. In another optional embodiment, the object is printed on a tray made of a thermal isolation material. In another optional embodiment, the lower-bound ([T1]) includes 20% less than the carrier boiling point temperature (T1) in degrees Kelvin. In another optional embodiment, the upper-bound ([T2]) is 20% more or less than the dispersant boiling point temperature (T2) in degrees Kelvin.

The step of maintaining is via use of an electro-magnetic (EM) radiation source above the obj ect.

In another optional embodiment, the printing is selective, printing to areas that are part of the first layer of the object and the EM radiation source is non-selective, irradiating an entire area on which the object is being printed.

In another optional embodiment, including at least two printing heads configured to print at least two inks, each of the at least two inks including particles of different types, and a local proportion of each of the at least two inks is determined by the first layer's specification.

According to the teachings of the present embodiment there is provided a method for printing an object including the steps of:
(a) printing a first layer of at least one ink;
(b) at least partially hardening the first layer; and
(c) leveling the first layer using a horizontal roller, the horizontal roller having a rotation axis generally parallel to a plane of the first layer.

In an optional embodiment, the horizontal roller is mounted on a horizontal axis with respect to a plane of the first layer. In another optional embodiment, the horizontal roller is selected from the group consisting of: grinding roller having an abrasive surface; a cutting roller having discrete blades; a cutting roller having spiral blades; and a cutting roller having discrete blades of steel and/or Tungsten Carbide.

In another optional embodiment, particle waste produced from leveling is removed from the first layer via use of a technique selected from the group consisting of: suction; and suction via a pipe through a dust filter.

In another optional embodiment, the horizontal roller is heated to a roller temperature higher than a layer temperature of the first layer, using a heating source selected from the group consisting of: a heat source external to the roller; a heat source internal to the roller; and a static internal heat source. The method includes a step of: printing a subsequent layer of at least one ink on the first layer.

A system for printing an object (not according to the invention) is disclosed, the system including: at least one printing head configured to print a first layer of at least one ink; a horizontal roller having a rotation generally perpendicular to a plane of the first layer; and a controller configured for at least partially hardening the first layer; and leveling the first layer using the horizontal roller.

In an optional embodiment, the horizontal roller is mounted on a horizontal axis with respect to a plane of the first layer. In another optional embodiment, the roller is selected from the group consisting of: a grinding roller having an abrasive surface; a cutting roller having discrete blades; a cutting roller having spiral blades; and a cutting roller having discrete blades of steel and Tungsten Carbide.

A method for printing an object with support (not according to the invention) is disclosed, the method including the steps of:
(a) printing an object portion of a first layer using at least a first ink, the first ink including:
   (i) a first carrier; and
   (ii) first particles used to construct the object and dispersed in the first carrier,
(b) printing a support portion of the first layer using at least a second ink, the second ink including:
   (i) a second carrier; and
   (ii) second particles used to construct the support and dispersed in the second carrier.

The first and second carriers may be liquids.

The method may further include a step of: printing a subsequent layer including respective object and support portions on the first layer.

The second particles may be selected from a group consisting of: miscible in water; at least partially soluble in water; inorganic solid; organic; polymer; particles having a hardness less than the hardness of the first particles; salt; Metal oxides; Silica (SiO2); Calcium sulfate; and tungsten carbide (WC).

The method may further include removing the support using a technique on the object with support, the technique selected from the group consisting of: firing; immersing to dissolve the support; immersing in water to dissolve the support; immersing in acid; sand blasting; and water jetting.

The particles may be selected from a group consisting of: metal; metal oxides; metal carbides; metal alloys; inorganic salts; polymeric particles; Polyolefin; and poly (4-methyl 1-pentene).

A system for printing an object with support (not according to the invention) is disclosed, the system including: at least one printing head a controller configured for: printing, via the at least one printing head, an object portion of a first layer using at least a first ink, the first ink including: a first carrier; and first particles used to construct the object and dispersed in the first carrier, printing, via the at least one printing head, a support portion of the first layer using at least a second ink, the second ink including: a second carrier; and second particles used to construct the support and dispersed in the second carrier.

The second carrier may be the first carrier. The second particles may be other than the first particles. The printing a support portion may be additionally with the first ink. The printing an object portion may be via at least a first printing head jetting the first ink and the printing a support portion is via at least a second printing head jetting the second ink. At least one of the printing heads may be modulated according to a content of the first layer.

A computer program (not according to the invention) is disclosed that can be loaded onto a server connected to a network, so that the server running the computer program constitutes a controller in a system implementing any one of the above system claims.

A computer-readable storage medium (not according to the invention) is disclosed having embedded thereon computer-readable code for printing an object, the computer-readable code comprising program code for:
(a) printing a first layer of at least one ink, each of the at least one ink including:
   (i) a carrier having a carrier boiling point temperature (T1);
   (ii) a dispersant having a dispersant boiling point temperature (T2); and
   (iii) particles having a particle sintering temperature (T3),
(b) while maintaining a temperature of the first layer (TL) in a pre-defined range of temperatures,
(c) wherein the pre-defined range of temperatures is above a lower-bound ([T1]) of the carrier boiling point temperature and below an upper-bound ([T2]) of the dispersant boiling point temperature ([T1] < TL< [T2]), thus evaporating the carrier while the dispersant remains in the first layer.

A computer-readable storage medium (not according to the invention) is disclosed having embedded thereon computer-readable code for printing an object, the computer-readable code comprising program code for:
(a) printing a first layer of at least one ink, each of the at least one ink including:
   (i) a carrier having a carrier boiling point temperature (T1);
   (ii) a dispersant having a dispersant boiling point temperature (T2); and
   (iii) particles having a particle sintering temperature (T3),
(b) evaporating at least a portion of the dispersant; and
(c) performing a subsequent operation selected from the group consisting of:
   (i) at least partially sintering the first layer; and
   (ii) repeating step (a) by printing a subsequent layer of the at least one ink on the first layer.

A computer-readable storage medium (not according to the invention) is disclosed having embedded thereon computer-readable code for printing an object, the computer-readable code comprising program code for:
(a) printing a first layer of at least one ink;
(b) at least partially hardening the first layer; and
(c) leveling the first layer using a horizontal roller, the horizontal roller having a rotation axis generally parallel to a plane of the first layer.

### BRIEF DESCRIPTION OF FIGURES

The embodiment is herein described, by way of example only, with reference to the accompanying drawings, wherein:
FIGURE 1 is a simplified diagram of 3D printing an individual layer.
FIGURE 2A is a simplified diagram of leveling apparatus.
FIGURE 2B is a simplified diagram of leveling apparatus with warming sources.
FIGURE 3A is a simplified exemplary system for 3D printing.
FIGURE 3B is a diagram of a lamp as an exemplary radiation source.
FIGURE 3C is a diagram of a lamp as an exemplary radiation source.
FIGURE 4A is a simplified diagram of a system for removing fumes during printing.
FIGURE 5 is a simplified diagram of a system for removing fumes during printing using an alternative radiation source.
FIGURE 6A is a diagram of solid particles with small edges.
FIGURE 6B is a diagram of solid particles with bridged sintering by smaller particles.
FIGURE 7 is a diagram of partial sintering.
FIGURE 8A is a diagram of dispensing catalyst material.
FIGURE 9 is a diagram of using a liquid pump roller.
FIGURE 10A is a diagram of objects built with different materials.
FIGURE 10B is a diagram of objects built with a mix of materials.
FIGURE 11A is a diagram of support when building a 3D object.
FIGURE 11B is a diagram of printing support portions and object portions of layers.
FIGURE 11C is a diagram of using reinforcing support columns.
FIGURE 12 is a diagram of an exemplary carousel machine for production of 3D objects.
FIGURE 13 is a high-level partial block diagram of an exemplary system configured to implement a controller for the present invention.

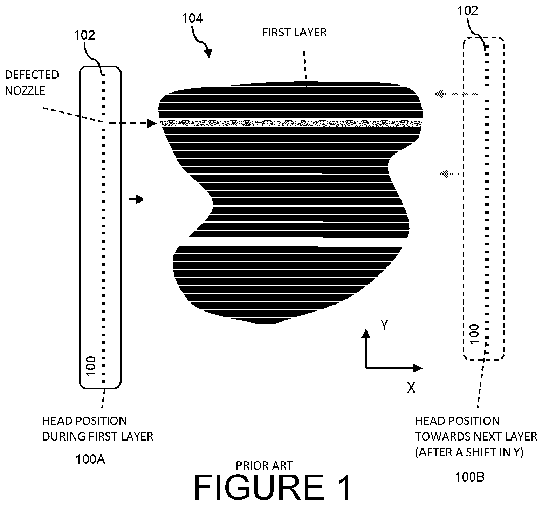

### DETAILED DESCRIPTION - FIGURES 1 to 13

### 1. Overview

The principles and operation of the method according to a present embodiment may be better understood with reference to the drawings and the accompanying description. A present invention is a system and method for 3D (three-dimensional) printing by dispensing ink including particles of any chosen material. Typically, the particles in the dispensed ink are micro or nano particles. Either during the printing or following the printing, the particles combine to each other (i.e. sinter) to form solid or porous solid material. The system facilitates:
Building a 3D structure,
Discharging the organic components,
Sintering the particles,
Preventing deformation, and
Stable ink dispersion.

In the context of this document, the term "object" generally refers to an item that a user desires to produce, in particular via 3D printing. In other words, the term "object" refers to an item to be produced by the 3D printing process. During printing, the term "object" can refer to an incomplete or partially generated item.

In the context of this document, the terms "burn out" or "burn off", "fire-off", or "firing-off refer to evaporating or disintegrating and evaporating a component of the ink.

In the context of this document, the mathematical sign for power may appear as "^", e.g. cm^2 means centimeter square.

In the context of this document, the terms "printing liquid" and "ink" refer in general to a material used for printing, and includes, but is not limited to homogeneous and non-homogenous materials, for example a carrier liquid containing a dissolved material such as metal particles to be deposited via the printing process.

In the context of this document, the term "dispersion" generally refers to particles distributed and suspended in a liquid or gas and/or distributed evenly throughout a medium.

In the context of this document, the term "pencil laser beam" generally refers to a laser beam that can be focused to a point, while "linear laser beam" refers to a laser beam that can be focused to a line.

In the non-limiting examples used in this document, generally the following notation is generally used to refer to temperatures:
T1 is boiling temperature of a carrier liquid.
T2 is organics (dispersant and additives) burn out (fire-off, evaporation) temperature, often referred to as "dispersant boiling point".
T3 is particles' characteristic temperature of sintering (depending on particles material and size).
TS is temperature of the upper surface of the object on which the new layer is dispensed. In some embodiments, TS is maintained substantially equal to the body temperature of the rest of the object during printing.
TL is temperature of the layer currently being printed (also referred to in the context of this document as the upper-layer, most recent layer, new layer, or first layer). Note that the temperature of the new layer optionally changes during printing of the new layer, as initially the new layer gets the temperature of the upper surface on which the new layer was dispensed (TS), and optionally later the temperature of the new layer increases as a result of additional heat that is applied to the new layer by auxiliary heat sources. Thus, TL is defined as the maximum temporal temperature of the new layer

Although embodiments are described with regard to an inkjet printing head, the described system and method is generally applicable to liquid-ejection nozzles of a liquid-ejection mechanism, such as nozzle dispensers. Liquid-ejection nozzles are also referred to as dispensing heads.

### 2. 3D Inkjet Printing

A preferred embodiment is using inkjet printing heads for dispensing ink. Another option is to use spray nozzles. Typically, inkjet printing provides increased speed, finer object dimensions, and increased quality of finished objects as compared to spray nozzles. The inkjet heads normally dispense the ink layer-by-layer, dispensing subsequent layers on previously dispensed layers. Typically, each layer is hardened before dispensing the succeeding layer. Preferably, the inkjet heads dispense each layer according to the image content of that layer. Alternatively, the inkjet heads "blindly" dispense the layer, and a hardening tool (e.g. a scanning laser beam) hardens the layer according to the layer's specific image content.

### 3. Ink

Generally, a printing system will include more than one type of ink. Inks include object ink and support ink. Object ink is used to produce the desired object, and support ink is used temporarily during printing, for example to support "negative" tilted walls of the object. In embodiments described in this document, inks typically include the following ingredients:
a. Micro or nano particles. The ink includes a dispersion of solid particles of any required material, e.g. metals (iron, copper, silver, gold, titanium etc.), metal oxides, oxides (SiO2, TiO2, BiO2 etc.), metal carbides, carbides (WC, A14C3, TiC), metal alloys (stainless steel, Titanium Ti64 etc.), inorganic salts, polymeric particles, etc., in volatile carrier liquid. The particles are of micro (0.5 to 50 micrometer size) or nano (5 to 500 nanometer size) as required to maintain the required spatial resolution during printing, maintain the required material character (after sintering), or to satisfy limitations of a dispensing head. For example, when the dispensing head is an inkjet array of nozzles, including nozzles of 30 µ (µ = micrometer or micron) diameter, the particle size should preferably be equal or smaller than 2µ. In the context of this document, the term "particles" generally refers to solid particles used to construct (print) the object and/or the "bulk material" of the object. The use of the term particles will be obvious from context.
b. Carrier liquid. The particles are dispersed in a carrier liquid, also referred to as a "carrier" or "solvent". A dispersing agent (often call dispersant) assist in dispersing the particles in the liquid. According to one embodiment, the liquid should evaporate immediately after printing so that the succeeding layer is dispensed on solid material below. Hence, the temperature of an upper layer of the object during printing should be comparable with the boiling temperature of the carrier. Conventional dispersants are readily available, such as polymeric dispersants such as Disperbyk 180, disperbyk 190, disperbyk 163, from Byk chemie GMBH. Conventional particle ink is readily available such as commercial SunTronic Jet Silver U6503, from Sun Chemicals Ltd. (485 Berkshire Av, Slough, UK).
c. Dissolved material. At least part of a solid material to be used to construct (print) the object can be dissolved in the ink. For example, a dispersion of silver (Ag) particles, which in addition to the Ag particles includes a fraction of Ag organic compound dissolved in the carrier liquid. After printing and during firing, the organic portion of the Ag organic compound fires off, leaving the metal silver atoms well spread. This conventional ink is readily available such as Commercial DYAG100 Conductive Silver Printing Ink, from Dyesol Inc. (USA), 2020 Fifth Street #638, Davis CA 95617.
d. Dispersing agent. In order to sustain particle dispersion, a dispersing agent (also referred to as a dispersant) is used in the ink. Dispersants are known in the industry, and are often a kind of polymeric molecule. In general, the dispersing molecules (molecules of the dispersant) adhere to the (solid) particle's surface (i.e. wrap the particles) and inhibit agglomeration of the particles to each other. When more than one solid particle species are dispersed in the dispersion, using the same dispersant material for all solid particle species is preferred so compatibility problems between different dispersant materials are avoided. The dispersing agent should also be able to dissolve in the carrier liquid so that a stable dispersion can be formed.

In conventional printing, the dispersant remains in the final object, typically at concentrations of about 10%. While having dispersant as part of a final 3D product may be acceptable for the construction of some objects, for other objects there is an essential need to remove substantially all of the dispersant. For example, to have the final concentration of dispersant be less than 0.1%. This is because:
a. the dispersing material prevents intimate touch of the particles with each other, and thereby prevents full sintering, and
b. the dispersing material weakens the solidified 3D structure (for example, if the dispersant agglomerates and remains as "islands" in the bulk material).

Hence, in some embodiments the dispersant must be removed before final sintering.

### 4. Nozzle scatter

Refer to FIGURE 1, a simplified diagram of 3D printing an individual layer. A printing head **100** is shown in a first position **100A** when preparing to print a first layer **104** of the object, and in a second position **100B** when preparing to print a subsequent layer of the object. The printing head **100** (e.g. inkjet head) includes a nozzle array **102** that scans the layer **104** in an **X** direction substantially perpendicular to the longitudinal axis **Y** of the layer **104.**

The jetted droplet volume of different individual nozzles (of the nozzle array **102)** may be slightly different from each other individual nozzle (of the nozzle array **102)** because of technology deficiency of the head **100** construction. Moreover, a nozzle can stop jetting as the nozzle can become clogged by aggregated ink particles or because of other reasons. In order to maintain a flat upper surface of the object being printed, and especially avoiding deep vacant lines in the 3D printed object, the head **100** is shifted along the Y-axis before every subsequent layer is printed. The shift amount from layer to layer may be set random within a predetermined shift range.

### 5. Leveling apparatus

Due to many reasons, including different jetting power (i.e. droplet volume) of the different nozzles, edge rounding due to liquid surface tension of the ink at the edge of a layer, and other known phenomena, the dispensed layer may not be perfectly flat (be too rough), and the dispensed layer's edge may not be perfectly sharp (be too rounded). Therefore, a leveling apparatus should be incorporated to flatten (level) the upper layer and/or sharpen (square off) one or more edges of the upper layer. In one embodiment, the appropriate leveling apparatus includes a vertical grinding roller or cutting (machining) roller. In a preferred embodiment, the appropriate leveling apparatus includes a horizontal (i.e. parallel to the printing surface) grinding roller or cutting (machining) roller.

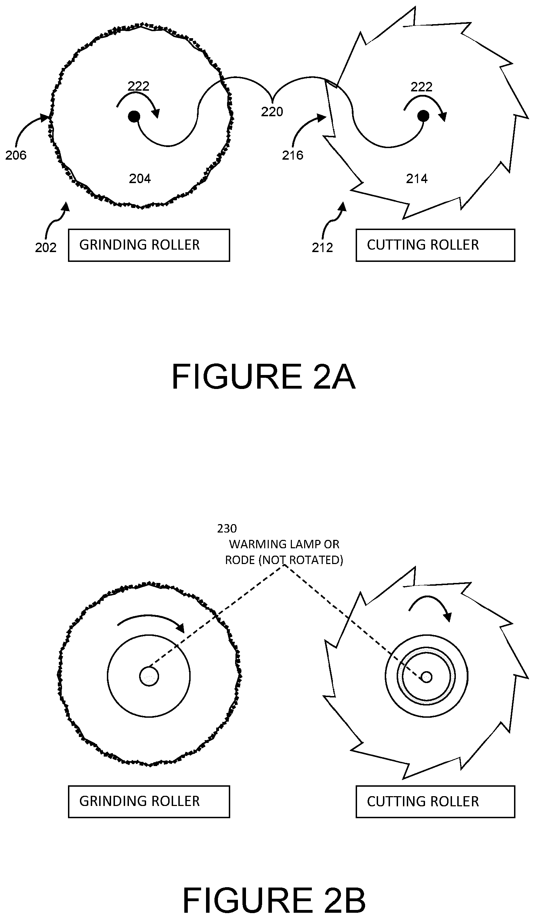

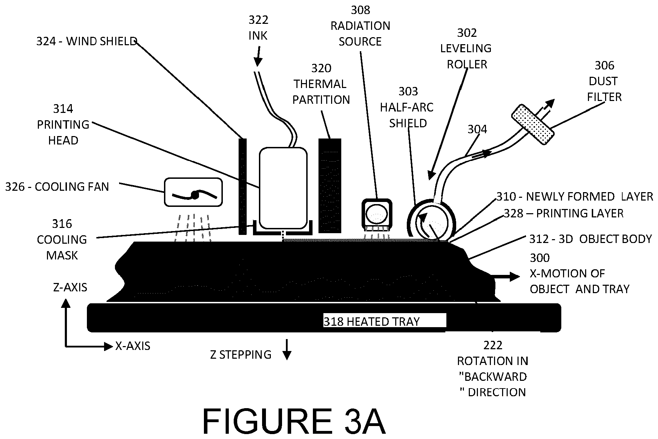

Refer now to FIGURE 2A, a simplified diagram of leveling apparatus and FIGURE 3A, a simplified exemplary system for 3D printing.

A 3D object **312** is typically constructed layer-by-layer on a substrate or tray. The tray is typically heated, and a non-limiting example of a heated tray **318** is generally used in this description. As described above, the object is printed in the plane of the X-Y axis, and a newly formed layer **310** (also referred to in the context of this document as the upper-layer) is built along the Z-axis during every printing pass. Ink **322** is supplied or contained in a printing head **314.** Optional cooling mask **316,** windshield **324,** thermal partition **320** are used to protect the printing head **314** from the other printing equipment and/or vice versa. Optional radiation source **308** and/or cooling fan **326** can be used to assist with temperature control of the newly printed layer and/or 3D object body **312.** Optional leveling roller **302** can be used during printing to smooth the surface of the newly formed layer **310** and/or the top surface (outermost surface along the Z-axis) of the 3D object body **312.** An optional dust filter **306** can be used to suck the dust output of leveling.

Leveling apparatus are also known in the field as "leveling rollers" or simply "rollers". The leveling apparatus operates on a newly formed layer **310** of a 3D object **312** after or as the layer has/is being been printed (dispensed and solidified). The leveling apparatus typically peels off between 5% and 30% of material of the most recently printed layer's height. In other words, shaving the top of the first layer (most recently printed layer). The roller meets the ink after the carrier liquid ink has evaporated and the layer is at least partially dry and solid. In some cases, solid means "a piece of metal", i.e. well sintered particles. In other cases, solid means a pile of particles adhered to each other by organic material or by some initial sintering. The leveling roller **302** may be a grinding roller **202** including a metal cylinder **204** with an abrasive surface **206,** for example coated with hard grinding particles, e.g. WC (Tungsten carbide) or diamond "dust". Alternatively, the leveling roller **302** may be a cutting roller **212** (also referred to in the context of this document as a "bladed" roller) including a milling cutting tool **214** with sharp blades **216.** Smooth and knurled rollers **202** are known in the art, for example smooth rollers as taught by Kritchman in US8038427 and knurled rollers as taught by Leyden in US6660209. A smooth roller is typically used to meter a liquid layer of material, and acts like a delicate shaving pump. A knurled roller, typically adapted to meter soft wax surface, consists of a multitude of relatively small knurls, or particles, as compared to the size of the cylinder **204** and/or relative to the size of the object to be ground. In contrast, a typical cutting roller **212** features discrete blades **216** that can be relatively large compared to the size of the object to be ground. Neither smooth nor knurled rollers can be adapted to level dry solid material for many reasons. In addition, when using a grinding roller **202** (and also smooth and knurled rollers), the grinding roller is substantially constantly in contact with the object to be leveled. In contrast, a cutting roller **212** is intermittently in contact with the object to be ground - only when the edge of a blade **216** encounters the surface to be leveled. Among the reasons that a knurled roller can be adapted to level dry solid material, is the direction of force that the vertical roller applies onto the shaped surface. When a rotating blade touches the surface, the blade first cuts in by applying horizontal force, and second lifts the cut chip up by applying upward force. When a rotating knurl touches the surface, the knurl first presses and pushes the material both downward and forward by applying downward and horizontal force, and second pushes the detached material up by applying forward and upward force. The downward force may be harmful to delicate object features, since the downward force will easily break the fragile object features.

In general, when referring to axis and orientations of rollers, reference is to the plane of printing, shown as the X-Y axis in the accompanying figures. In conventional implementations, vertical milling or smoothing tools, including multiple cutting blades or grinding disk (e.g. including diamond dust surface), are mounted to a vertical beam that is perpendicular to the plane of printing / plane of the upper surface of the object, and rotates about the beam. These vertical milling tools are used to level the upper-layer (most recently printed and at least partially solidified). The cutting or grinding surface of the vertical tools is parallel to the plane of printing, but the rotation vector points vertically upwards. In an innovative embodiment, the leveling roller is mounted on a horizontal axis and rotates about a horizontal axis (horizontal to the plane of the upper layer of the object), thus providing a horizontal roller. The grinding surface of a horizontal roller at the point of contact (touch) with the material is generally also horizontal (parallel to the plane of printing), but the rotation vector is horizontal (points horizontally, perpendicular to the sweep direction X). The horizontal roller rotates about a horizontal axis **220** relative to the layer being ground. In other words, the outer surface of the roller (or the blade's tip) moves horizontally at the point of contact with the object's new layer. The horizontal roller can be a grinding roller **202,** or preferably, the horizontal roller allows implementation with a cutting (bladed) roller **212.** A feature of the horizontal roller as compared to the vertical tools is the feasibility to collect outcome dust (including shaved material). While a vertical tool ejects the dust to all directions pointing outward from the vertical axle (i.e. all around directions parallel to the printing surface), a horizontal roller lifts the dust upward in such manner that the dust can be more easily collected and pumped out, such as via into a dust filter **306.** In addition, the vertical tool can be very sensitive to precise alignment, since the vertical tool touches the printing surface all over the vertical tool's horizontal surface. When the vertical axle deviates by an angle of α from ideal verticality (towards X direction), the tool's horizontal surface also deviates by the same angle of α from ideal horizontality. In this case, the processed upper surface of the object will not be flat in Y direction but rather having a banana shape (lower in the middle). Quantitatively, if the radius of the rotated blades or grinding surface is e.g. R=50 mm, the amount of the banana effect will be ΔZ = α^{∗}R (^{∗} means multiplication, and α expressed in radians). Thus α=1 milliradian (i.e. α=0.06⁰, which is difficult to achieve) results in ΔZ = 50 micron, which is hardly acceptable. In comparison to this very sensitive alignment, a horizontal roller touches the printing surface substantially only at a line, and therefore there is no need to align a horizontal roller in the X-axis direction. A substantial disadvantage of the grinding surface in comparison to the cutting bladed roller / tool is that the grinding surface is vulnerable to dust (shaved particles) sticking to the diamond dust (of the grinding surface) and disturb thereby proper grinding.

Experiments have shown that the smaller a chip that a blade abrades from the object surface at a touch, the smaller will be the tendency of fine details to break. In one implementation, the cutting roller includes N blades and rotates at an F RPM (revolution per minute), and the relative sweep velocity between the roller and the object in X direction is V. For a given V, the smallest chip is obtained when N and F are set to maximum values. Experiments have also shown that using a spiral blade in comparison to using a straight blade has also positive influence on preventing harm to delicate details, since a spiral blade cuts only a relatively small spot (as compared to a straight blade) in the shaved surface at a time, while the spot's neighboring area holds the spot from breaking. Successful results (no breakage) were obtained with a horizontal roller including N=40, F=3500 RPM, spiral blades (1 revolution per 150 mm roller length), V=100 mm/s (roller diameter = 25 mm). The roller material should be such that, a. the blades can be highly sharpened, and b. the blades should withstand the impact with the printed particles that the blades shave. Both requirements dictate use of a hard material. Successful results (no breakage and long blade life) were obtained with cutting rollers made of, a. "high speed steel", and b. "Tungsten Carbide" material (i.e. WC + Co).

For simplicity in this description, the orientation of a horizontal roller is described as being perpendicular to the direction of sweep during printing. However, one skilled in the art will realize that the orientation does not have to be (can be other than) strictly perpendicular and may be at an angle (non-zero) to the sweep direction.

The rotation direction **222** of the cutting roller **212** vs. the relative sweep direction between the roller and the object can be either in the "cutting and lifting" direction (for example, clockwise in FIGURE 2A and FIGURE 2B), or in the "dig and push" direction (counter clockwise in FIGURE 2A and FIGURE 2B). The direction of the relative object shift vs. roller during leveling (X-motion of object and tray **300)** is not definite (undefined / not pre-defined), and can be different in different applications. Based on this description, one skilled in the art will be able to determined specific details, attributes of the printed material, and other considerations of the printing machine for implementing a specific application depending on the.

As discussed before, as a result of leveling (shaving) the object via use of a roller (such as grinding or cutting rollers), particle waste can be generated. The particle waste can include shaved particles and/or dust of the solid particles from the printing ink. Techniques to prevent the particle waste from being scattered over the printing surface, and to remove the waste from the roller blades, should be applied. The horizontal roller facilitates implementation of techniques for preventing scattering of particle waste, for example by adding a shield around the roller (half-arch shield **303)** and applying sucking force via pipe **304** during "rolling". The particle waste is sucked off the surface of the object and the blades, optionally through a filter **306.**

The roller may be installed before or preferably after a radiation source **308** such as incandescent or discharge lamp (shown), coherent beam (laser), or ultra-violet (UV), visible, or infrared (IR) radiation source, etc.

Refer now also to FIGURE 2B, a simplified diagram of leveling apparatus with warming sources. When the dried ink is sticky, the ink particles may stick to the roller blades or grinding particles and thereby disturb proper leveling. This might be a consequence of insufficient drying of the ink or insufficient firing the organic elements. To prevent this effect, the layer can be further dried by elevating the layer temperature. This technique of elevating the layer temperature might be unacceptable in some cases because of other aspects of the printing process, e.g. deformation of the printed object. Alternatively, the roller can be warmed to high enough temperature in which the problem of stickiness of the ink is avoided. In a non-limiting example, the roller may be set 100 degrees Celsius (°C) or even higher than the layer's temperature. Warming the roller may be done by heating the roller's outer surface by an external heat source (i.e. located outside the roller) or by an inner heat source located in the roller. Inner heat sources preferably include static (non-rotating) warming element, such as a halogen lamp or a heat rode **230.**

### 6. Mask

In the context of this document, a mask refers to a plate that partially covers an orifice plate and has an opening to facilitate printing from nozzles to a print area. Masks are also referred to as "cooling masks" and can be used as a "thermal buffer".

Since the printed object **312** is relatively hot (e.g. 230°C) as compared to room temperature (25°C), as required during the formation of a layer and evaporating the carrier liquid, the printing heads **314** (such as printing head **100)** that scan the upper layer in close vicinity (0.5- 3 mm between the printing head **314** and object **312)** must be protected from the heat and fumes emerging from the newly formed layer **310** (dispensed layer). A cooling mask **316** maintained at a relatively low temperature compared to the temperature of the object while being printed (e.g. from 10 to 40°C) is installed as a buffer between the printing head **314** and the printed object **312.**

### 7. Heating tools

In order to maintain printing accuracy, the printed object should preferably be maintained substantially at uniform and constant temperature throughout printing. The upper surface of the object body, however, keeps losing heat to the surrounding atmosphere during printing, and also supplies heat to the newly dispensed layer, since the dispensed ink is usually colder than the object, and since heat is consumed by the evaporation of the liquid carrier of the new layer. If the heat source is only below the object (for example, a heated tray **318),** the heat constantly flows up to the upper layer, and because of the heat-flow resistance of the material, a temperature gradient is built, high temperature at the bottom of the object and low at the upper surface of the object (along the Z-axis). The heat should also (or merely) be supplied directly to the upper surface or layer. In addition, the temperature of the upper layer should be the same during the printing (though may be higher than the temperature of the bulk), because drying and possibly evaporating the organics and partial sintering occur in that layer, processes that strongly depend on the layer temperature.

In the context of this document, the term "printing surface" **328** typically includes the most recently printed finished layer, prior to printing of the current, newly formed layer **310.** In other words, the printing surface **328** is the upper surface or upper layer, most recently previously printed along the Z-axis, and is the surface upon which the newly formed layer **310** is printed. When printing begins, the printing surface is the substrate, for example the heated tray **318.** However, after printing begins, the printing surface is typically the upper surface of the object body, plus supporting material, as appropriate.

Heat is supplied to the upper surface by an electromagnetic (EM) energy source through the surrounding gas or vacuum. The EM energy source is a radiation source **308.** Typically, the radiation source **308** is located above the upper layer / object being printed. The direct heating by the EM source can assure constant temperature of the upper layer. When direct heating of the upper layer is not applied, the temperature of the tray **318** (on which the object is printed) should be controlled higher and higher dependently on the interim height of the object during printing, so as to keep the temperature of the upper layer constant. An additional supply of heat to the upper surface is a stream of hot air blown on the upper printed layer. The use of hot air is not only for increasing the temperature of the upper layer but also, or rather for encouraging, the evaporation of liquid carrier (and in some cases the dispersing agent and other organic material) from the upper surface. A combination of EM radiation, hot air, and warm tray (or any combination thereof) can be used to maximize the heating and/or evaporation performance.

The substrate's surface on which printing is accomplished (for example, the tray **318)** presents intimate touch with the object and therefore should be at the same temperature of the object. If the substrate (i.e. tray) is thermally conductive, e.g. made of metal, warming the tray to the required object temperature can be essential for producing correctly a desired object. Alternatively, the tray may include thermally insulating material, e.g. wood, plastic, or insulating ceramics. In this case, the substrate keeps the object's temperature, while heating of the object is accomplished by heat radiation from above.

When the object height is relatively small and the object's material has high enough heat conductance, heating the object only from the substrate side may be sufficient. In this context, "high enough heat conductance" generally means that the temperature gradient (which is given by the product of heat conductance per length multiplied by the height Z) is small, e.g. smaller than 1% of the object temperature during printing, measured in Celsius. For example, if the heat conductance is comparable to that of fully sintered metals (100 W/(C.m)), the condition on the temperature gradient can be met up to a relatively small printing height of 10 mm. This, however, is not always the case. The object can be high, e.g. higher than 10 mm in the current example, and can be made of poor material heat conductance (e.g. 1 W/(C.m) and smaller). Therefore heating from the upper side of the object is essential. Heating from the upper side can be done by the EM energy source, as is described below.

### 7.1. Radiation source

As described above, the EM energy source is typically positioned aside the printing head **314,** and can be of a UV, visible or IR radiation type.

Optionally, a radiation source **308** is installed after, or preferably before, the leveling roller **302.** The radiation source **308** can be used for one or more tasks, including:
Heating the upper layer of the object to maintain a constant temperature of the upper layer, independent of the height of the layer above the heated tray **318.**
Heating the upper new layer of the object above the temperature of the printed surface (i.e. the former layer) TS, and as a result:
   Maintaining the 3D object **312** (whole body) at the same temperature (except the temperature of the upper new layer that can be temporarily higher), i.e. avoiding a temperature gradient along Z direction (top to bottom of the object **312** as the object **312** is being printed).

A special case is the UV radiation source. UV radiation has the potential to disintegrate dispersing molecules that are attached to the particles by breaking molecular connections. At the same time, the UV also heats up the layer, assisting thereby the evaporation of the dispersant material or the dispersant material's fragments.

### 7.2. Extra heating of the new layer

Assume the boiling temperature of a carrier liquid is T1. The temperature of the upper surface is preferably maintained at TS, which is substantially comparable to or higher than T1 (e.g. higher than 0.8xT 1 in Kelvin) so that after jetting the ink, the temperature of the new layer (TL) abruptly increases to TS, and carrier liquid evaporates immediately. Generally, the temperature of the whole object during printing can be maintained at TS as well.

In order to evaporate the dispersant material and other organic additives, and optionally initiating at least partial sintering between the building particles, higher temperature of the upper (new) layer TL may be required. Substantial increase of the temperature of printing surface TS above T1 (e.g. by 30 °C) is generally unacceptable, since the landing ink droplets on such a hot surface would explode rather than attach to the surface, like when water droplets land on a surface of 120 °C (the explosion effect can be exploited in a special embodiment which will be described later). In this case, the rest of the object is not required to maintain at such high temperature (TL), but just maintain at a constant and uniform temperature TS.

When a newly formed first layer is dispensed, the layer is typically exposed to air (the environment of the printing machine), and thus organics in the ink have the chance to evaporate, prior to this first layer being covered by a subsequent printed layer. Thus, in one embodiment, the new layer is warmed to a higher temperature TL than the boiling temperature of the carrier liquid T1 (e.g. if T1=230 °C the new layer can be warmed to 400 °C), even though the lower (previously jetted / previously printed) layers stay at a relatively lower temperature TS (e.g. 230 °C).

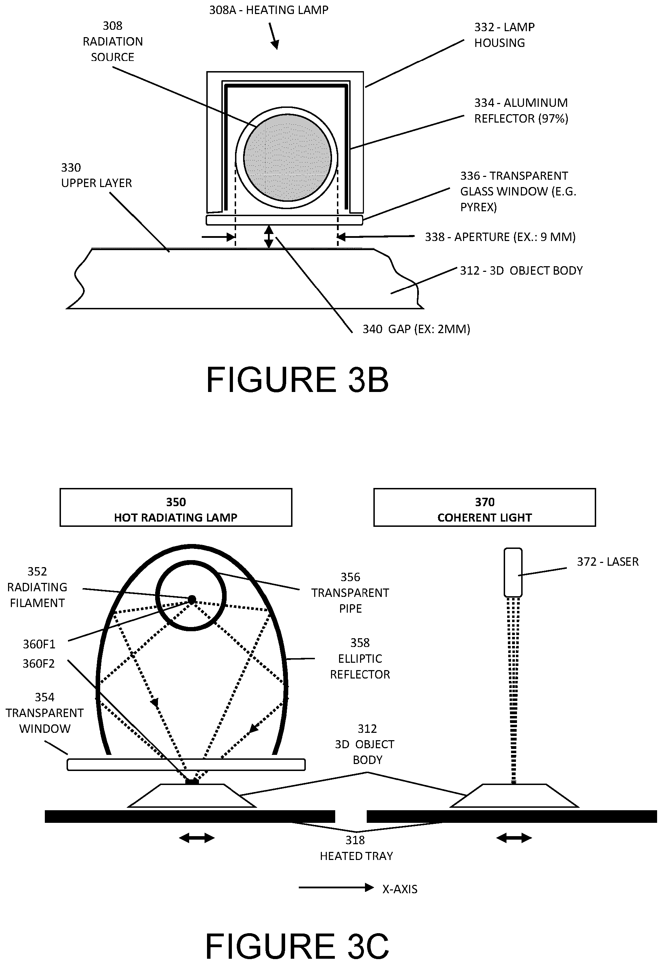

Refer now to FIGURE 3B, a diagram of a lamp as an exemplary radiation source. As discussed above, heating the new layer is accomplished by a radiation source **308** typically from above the object. If lower layers under the upper layer are at a lower temperature than the upper layer, maximizing the heat irradiance (i.e. irradiated power per surface area of the new layer) is important in order to get an instant higher temperature of the layer, before the heat dissipates to the preceding (previously printed) layers by conduction or dissipates to the air above by conduction and convection. Therefore, given a heating lamp **308A** (as radiation source **308),** the lamp should be as close to the body **312** surface and reflector aperture as narrow as possible.

A lamp housing **332** typically includes a metal envelop covered with an insulation material to prevent heating adjacent elements. A polished aluminum reflector **334** is typically required especially to protect the reflector and housing from overheating. The polished aluminum reflector **334** typically reflects 97% of heat. A transparent glass window **336** is typically high transparency (i.e. small radiation absorbance is required especially to protect the window from overheating). The window **336** is made of a material appropriate for the specific application (e.g. Pyrex or quartz). An aperture **338** (ex.: 9 mm) is used for a given radiation power. A relatively small lamp's aperture assures high irradiation power (i.e. high radiation power per unit area of the printed layer). A small gap **340** between the heating lamp **308A** (more specifically, typically from the transparent window **336)** to the upper layer of the object body **312)** assists in preventing the lamp radiation illuminating large area of the layer at one time. However, focused radiation enables much higher irradiance (FIGURE 3C).

Refer to Table 1 and Table 2, below for exemplary calculations showing that for most solid metals that are typically used to construct a 3D object, thermal conduction is so high that very intense radiation is required for warming the new layer to a substantially higher temperature than that of the object (e.g. Ir=1000KW/cm^2 is required to obtain ΔT= 81C)

Temperature rise (ΔT=TL-TS) of a new layer above the object's temperature

| Table 1-Example parameters | | |
|---|---|---|
| Layer thickness | 5 | µ |
| Light irradiation power (Ir) | 0.1, 1, 10 | KW/cm^2 |
| Radiation absorbance | 0.7 | |

| Table 2- ΔT | | | | | |
|---|---|---|---|---|---|
| | Silver | WC | Plastic | Air | Ceramics |
| Thermal conductivity | 430 | 84 | 0.2 | 0.04 | 0.5 to 5 |
| Temperature rise (Ir=0.1KW/cm^2) | 8E-03 | 4E-02 | 17.5 | 87.5 | 7 to 0.7 |
| Temperature rise (Ir=1KW/cm^2) | 0.08 | 0.42 | 175 | 875 | 70 to 7 |
| Temperature rise (Ir=10KW/cm^2) | 0.81 | 4.17 | 1750 | 8750 | 700 to 70 |

Unit symbols:
C means Celsius
m means meter
W means Watt
µ means micron
cm means centimeter.

When a layer of metal is fully sintered just after being dispensed, the layer's structure is continuously solid, and then the relevant thermal conductivity is that cited for the metal (e.g. 430 W/ (C.m for silver), and the temperature rise **ΔT** is as calculated in the table above (much less the 1 °C).

However, when substantially no sintering occurs at the printing stage, the layer's structure is like a pile of particles. Measurements show that nearly only half the printed volume is occupied by solid particles, while the rest is mostly air. Thus, in each direction (X, Y, Z) only 80% of the layer is occupied by solid particle (since 0.8x0.8x0.8 ≈ 0.5), and the rest of the volume of the non- or partially-sintered object is air. Thus, every layer is equivalent to a layer that includes in height of the layer 80% metal and 20% air. Since air conductivity (0.04 W/(C.m)) is substantially lower than metal conductivity (for example WC: 84 W/(C.m)) the air layer portion dominants the conductivity of the layer. Thus, when the irradiation power is 0.1 KW/cm^2, the temperature rise in this case is the temperature rise of a 5x0.2 µ air layer, i.e. ΔT=87.5×0.2= 17.7 °C (wherein 87.5 is taken from the second row of Table 2).

All this holds with an irradiation of 0.1 KW/cm^2, which represents an exemplary intense irradiation from a longitudinal halogen lamp. If a focusing reflector (elliptic) is used, the irradiation is more condensed by a factor of 10 (i.e. Ir=1KW/ cm^2), and then a similar calculation leads to ΔT=875×0.2= 177 °C (wherein 875 is taken from the third row of Table 2).

Higher temperature rise **ΔT** can be obtained at much higher power density of the radiation, for example by a linear laser beam which includes a focused line (typically Ir=6 KW/cm^2), or by a scanning focused spot laser beam including a scanning spot of irradiation (typically Ir=600 KW/cm^2), or by flash radiation (wherein high power radiation is absorbed at very short time (see typical example below)). These techniques are further described below.

Operating a flash radiation source refers to a technique where the radiation is transmitted in a very short time, e.g. 1 ms, at high power, e.g. Ir=10KW/cm^2. In this case, the temperature rise of a non- or partially-sintered object would be ΔT= 8750x0.2= 1770 °C (wherein 8750 is taken from the fourth row of Table 2).

When printing thermal insulating material, e.g. oxides like SiO2, TiO2 or other ceramic material, thermal conductivity is typically between 0.5 to 5 W/(C.m) (see Table 2). If after warming the upper layer, the upper layer does not become sintered (remains un-sintered), the air layer portion conductivity is still lower than oxide layer conductivity and the air dominants the conductivity of the layer as in the case of metal particles. If the layer becomes sintered (under the flash radiation), because of the high irradiation power Ir and despite of the high thermal conductivity, the temperature rise ΔT of the layer will go up to 70 to 700 °C (see the fourth row of Table 2).

The above-described possibility to warm the new layer significantly beyond the temperature of the former layers, enables keeping the temperature of the printed object much lower than the instant temperature required to burn off the organics or to sinter the object. A fan (for example cooling fan **326)** may be required to lower the temperature back to a lower object temperature.

The upper surface of the body will dissipate to the surrounding air roughly 3W/cm^2 at a temperature of 400 °C. Therefore the lamp above should supply this much power to the upper layer in order to maintaining the object body's temperature constant and even, and even larger power is required in order to compensate for the material evaporation and sintering heat consumption.

### 7.3. Focused radiation

As indicated above, focused radiation may be used to obtain an instant temperature of the upper layer higher than the body temperature. In conventional implementations, a layer of dry particles is evenly spread on the preceding layer, and then focused radiation (for example, a scanning focused point (i.e. spot) laser beam) scans the layer and selectively solidifies the required portion of the layer according to a layer map.

According to one embodiment, the particles used to construct the current layer are not evenly spread (unevenly distributed) on the preceding layer, but the particles (layer) is selectively dispensed according to a layer map. This facilitates use of non-selective radiation to create a newly formed layer only where the particles have been selectively dispensed.

Refer now to FIGURE 3C, a diagram of a lamp as an exemplary radiation source. Embodiments can include one or more of the following techniques:

### a. Linear lamp and focusing reflector

Refer now to FIGURE 3C a diagram of radiation sources. A first embodiment is a hot radiating lamp **350,** including a linear bulb (discussed above), including a linear radiating filament **352** enclosed a quartz transparent pipe **356,** coupled with a focusing reflective surface having elliptic transection **358,** enclosed in a transparent window **354** (for example, protective glass). The filament is located in one focal point **360F1** of the elliptic curvature, while the filament's hot image is obtained in the other focal point **360F2,** on the upper surface of the body being printed. The width of the image can be comparable to the length of the filament perimeter (but never smaller). In a practical example the filament perimeter is equal to 1 mm, the width of the image of the filament on the 3D upper surface is 3 mm, and the radiated power is 50W/(cm length). Hence, the irradiation power obtained at the part surface is 50/0.3=167W/cm^2.

### b. Focused linear coherent beam

Refer again to FIGURE 3C. A second embodiment includes a linear coherent beam **370.** An appropriate laser device **372** can be obtained from, e.g. from Coherent Inc, Part No LIM-C-60. Such laser has a focal plane, which is the plane of minimal waist. A typical waist width is 50 µ. A typical power of the laser is 20W/cm. Hence, the irradiation power is 4000 W/cm^2. At such power, heat loss is much smaller than the input heat, and therefore the layer temperature can substantially exceed the body's temperature. Before the particles sinter to each other, the temperature rise of the upper layer will get to ΔT=1770× 4/10 = 708 °C, wherein 1770 °C is the temperature rise **ΔT** of the upper layer per irradiation power of 10 KW/cm^2 (due to the isolation of air between the solid particles, see preceding chapter), and 4/10 reflects the ratio between 4 and 10 KW/cm^2.

### c. Scanning focused beam

A third embodiment includes a spot (point) coherent beam with a scanning apparatus (e.g. rotating mirror polygon). Unlike traditional 3D metal printing in which the beam is modulated on/off according to the image of the layer, the beam in the current embodiment can be "dumb" (although the beam can also be modulated according to the image, at least for saving energy). This "dumb" beam scans a line in the Y direction, while the object body moves in X direction. A typical laser power is 500 W, and focal spot of 50 µ diameter. Hence, the irradiation power is 500/0.005^2 = 2 10^4 KW/cm^2 (typically the difference between the area of a disk and a square is ignored for this calculation). Such irradiation power can warm the layer much above the sintering temperature of all metals and ceramic material.

### 8. Getting rid of fumes

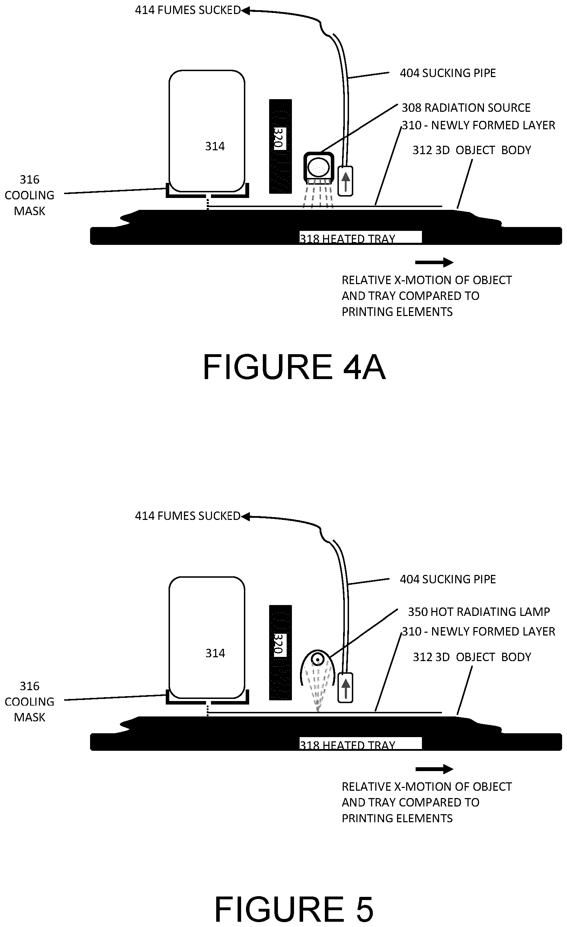

Refer now to FIGURE 3A and FIGURE 4A, a simplified diagram of a system for removing fumes during printing and FIGURE 5, a simplified diagram of a system for removing fumes during printing using an alternative radiation source. Typically, during inkjet printing of a 3D object, a substantial amount of fumes emerges from the dispensed and heated ink layer, including the carrier liquid and possibly the dispersant. The fumes maybe harmful to the printer parts since they can condense on relatively colder surfaces (as compared to the temperature of the 3D object **312** during printing) including surfaces such as electronic boards and parts. According to an embodiment, the fumes are collected by sucking pipe(s) **404** providing sucking **414** located adjacent to the printing head **314** and/or near the spot where the layer is further heated by the radiation source **308.**

### 9. Sustaining the 3D structure ;

In conventional technologies, glue is often added to the particle ink (e.g. photo-polymer, thermo-plastic polymer etc). This glue material assists sustaining the 3D structure during printing, a time before subsequent hardening process (i.e. sintering) of the entire object in a high temperature oven. For example, (in a conventional process) a powder dispenser spreads solid (dry) particles over the entire tray (tray on which the object is being printed/constructed, such as heated tray **318),** and a printing head subsequently dispenses liquid glue on the particles spread according to the desired content of the layer being printed. This process repeats layer by layer until the printing finishes. Later, the loose particles are removed, and the glued object is transferred from the printer to an oven. In the oven, the object is heated to a high temperature for accomplishing sintering. During the sintering process a majority of the glue fires off, however typically a portion of the glue remains. The remaining glue interferes and/or interrupts sintering if the glue does not completely evaporate in the oven. In addition, the presence of glue in an object's structure may be undesirable, as described elsewhere in this document.

A technique for avoiding problems with glue is to do sintering during printing on a layer basis, and therefore glue is not required. For example, a powder dispenser spreads particles over the entire tray, and a subsequent focused laser beam scans the spread particles according to the content of the layer. Every spot that is illuminated by the beam heats up sufficiently to sinter the powder at the illuminated location.

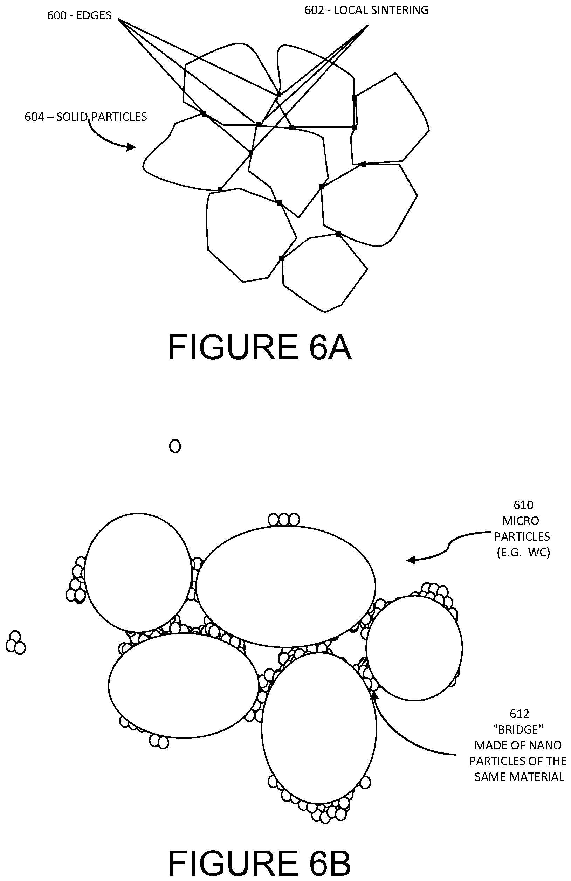

According to embodiments of the current invention, the particle construction is sustained at least in part by:
a. During printing, the carrier liquid immediately evaporates, and the particles attach to each other by the dispersant molecules that surround each particle. In this case, the dispersant is chosen to have not only the attribute of separating the particles from each other in the ink dispersion, but also attaching to each other when the carrier liquid (solvent) is removed. Using conventional terms, the dispersant here plays the role of a binder. Often the dispersant is a polymeric molecule that has good adhesion properties.
b. When the complete object is heated in an oven, the dispersant molecules firstly evaporate and then initial sintering takes place to hold the particles together until complete sintering.
c. Refer now to FIGURE 6A a diagram of solid particles with small edges. A well-known characteristic is that small particles sinter at a relatively lower temperature than large particles (e.g. 50 nm size WC particles sinter at 800°C compared to 700 nm particles that sinter at 1400°C). In this context, small is compared to large where the difference between small and large is sufficient to result in an apparent difference in sintering temperature for the desired application. In cases where sintering starts at a much higher temperature than that of the dispersant's evaporating, the solid particles **604** are chosen, or made, not regular, i.e. irregular / including sharp edges **600,** i.e. edges that are characterized by small round radii as compared to the overall radius of the particle. Such edges have the property of locally sintering **602** at a reduced temperature (as compared to the higher sintering temperature for the bulk of the particle) as much as particles made with such small radii have.

Refer now to and FIGURE 6B a diagram of solid particles with bridged sintering by smaller particles. In addition, the preparation of the solid particles **610** can includes a fraction of much smaller particles **612** than the average size of the main (larger) particles (e.g. 50 nm size when the average size is 700 nm). These smaller particles will sinter at a lower temperature (e.g. 800°C as compared to 1400°C), and partially stick the large particles to each other by a "bridging" structure.

Thus, once the dispersant fires out, some initial sintering takes place in the points of intimate touch between the sharp edges of the large particles or due to the "bridging" effect by the small particles between the large ones. Note that this partial sintering is located in small points between the large particle, and therefore the bulk structure remains porous so that the fired dispersant can flow out of the material.

### 10. Getting rid of organic material

The ink contains carrier liquid, dispersing material, and possibly more than one additive that participate in perfecting printing, all are often organic material. As described above, a desired feature is to get rid of this organic material as soon as possible, or at least before final sintering.

The carrier liquid substantially evaporates during the formation of the layer and thus the layer becomes solid. This is accomplished at least in part by maintaining a relatively high temperature of the body of the 3D object (or at least the upper layers of the 3D object). In this case, the high temperature is a temperature kept at a temperature comparable to the boiling point of the liquid carrier or higher. In some embodiments, the high temperature can be 20% more or less than the boiling temperature of the carrier when the temperature is measured in Kelvin.

The dispersant remains in the bulk material during printing. In conventional terms, when the organic material (which plays the role of a binder) remains in the printed object, the object is referred to as a "green object". In this case, after printing the object, but before firing the object, an extra stage of initial heating is performed usually in an oven. In this initial heating stage the organic material (whether disintegrates or not) slowly flows out to the object's outer surface, and evaporates. This initial heating is done before elevating the firing temperature to a temperature where full sintering occurs. A desirable feature is to prevent complete sintering of the object particles during the stage of organics extraction. This is desirable for reasons including:
a. not blocking the paths from which the organics flow out of the bulk material, and
b. not preserving the sponge-like lattice of material that prevails before the organic material is extracted.

Preventing complete sintering in the stage of organics evaporation can be done by adjusting the particles' characteristic temperature T3 of sintering (depending on particles material and size) or by choosing the organics (dispersant and additives) with appropriate burn out temperature T2, so that T3>T2.

### 11. Partial sintering during print

Partial sintering during printing can strengthen the newly formed layer before leveling, or (as explained above) strengthen the object before removing the object from the substrate, and/or prior to firing the object (in an oven). In the context of this document, the term "partial sintering" generally refers to particles melting to each other only partially, that is at one or more locations on the surface of each particle without the complete surface of the particles contacting surrounding particle surfaces.

In one embodiment, partial sintering of an object body is obtained during printing of the object. Partial sintering can allow subsequent firing and removing dispersant, even when firing of the dispersant is done after completing printing the object, because the open porous structure is still there.

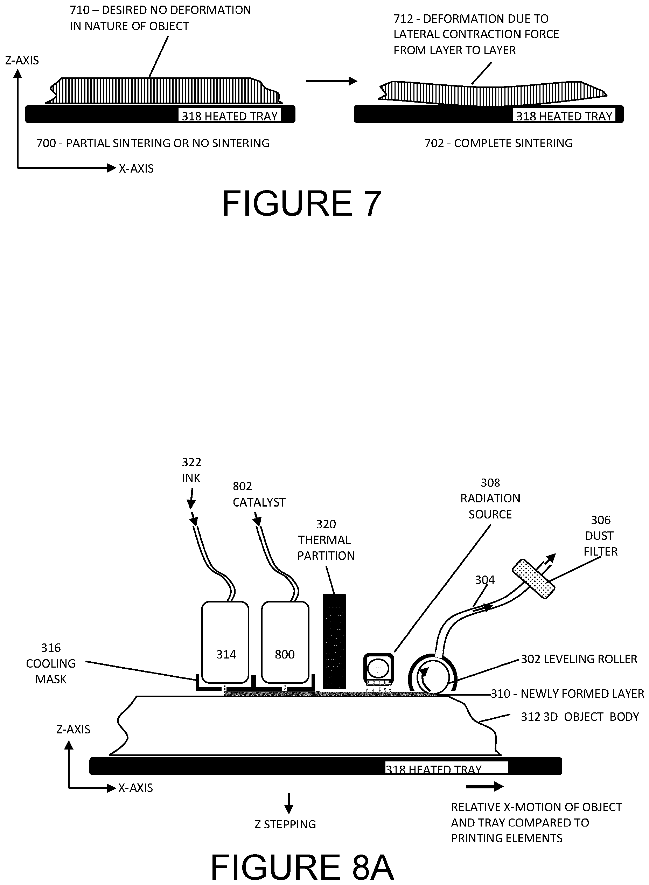

Refer now to FIGURE 7, a diagram of partial sintering. During sintering objects typically contract since the particles move closer to each other and fill voids in-between particles. In most cases, this contraction of the object being sintered is substantial (e.g. 20% in every dimension). Because the newly formed layer is typically very thin (e.g. 5 micron before contraction) as compared to the lateral dimension (X-Y) of the object (e.g 50 mm), the friction of the newly formed layer with the former (previously) printed and dried layer diminishes the contraction in X-Y plan, and the vast contraction accomplished only in the bottom direction, i.e. towards the preceding layer that has already sintered. Yet the capillary force that acts to contract also in the layer plane (i.e. in X, Y directions), which is balanced by the aforementioned friction, introduces lateral contraction force in the layer. This force repeatedly from layer to layer during complete sintering **702** may cause deformation in the nature of the object **712.** On the other hand, partial sintering **700** can be enough for holding the particles together and yet not introducing too large contraction force in the (newly formed) layer. Thus, partial sintering facilitates maintaining a desired nature (shape) of the object during printing **710.**

Sintering temperature should be considered carefully for enabling partial sintering. At high enough temperature, the particles melt to each other and form a nearly or fully solid material (complete sintering). The required sintering temperature substantially depends on the melting point of the particles' material and the size of the particles. For example, the melting point of silver is 960 °C; 1 µm (micrometer) silver particles sinter at 800 °C, but 20 nm (nano-meter) silver particles sinter at 200 °C. So in order to do partial sintering of an object made of silver particles, if 1 um particles are used, the newly formed layer can be warmed for example to 500 °C, a temperature in which the organics are fired off and partial sintering replaces the organic material to hold the object from being dismantled.

### 12. Complete (or sufficient) sintering at a layer level

The dispersant (and possibly other additives in the ink) can interfere with the desired quality of sintering, and thus removing these materials (the dispersant and possibly other additives) can be important for obtaining sintering (but not necessarily sufficient for obtaining sintering). For simplicity in the following discussion, one skilled in the art will understand that references to dispersant can also refer to possibly other additives.

In contrast to printing at a moderate temperature (e.g. 230 °C) and only later sintering the complete body in a high temperature oven, the innovative technique (not according to the invention) of complete sintering when printing a layer includes features such as:
a. Getting rid of dispersing molecules and additives just when the upper layer (at a temperature T2) is in touch with the open air. When evaporating the dispersant is done in an oven, the resultant gases have difficulty defusing through the bulk material, especially when part of the object can be at least partially sintered. At this point note that the outer envelope of an object in an oven sinters out before the bulk completely sinters. This is mainly because that the heat flows in the oven from the outer envelope towards the center of the object, and this must be accompanied with a temperature gradient - higher temperature at the envelope than in the bulk. So well before the bulk is sintered the envelope sinters, and the gas cannot go out of the obj ect.
b. Further heating the layer to a temperature T3, so as to encouraging sintering, wherein contraction, which accompanies sintering, takes place in the down (Z-axis) direction rather than in lateral X-axis and Y-axis directions (as explained above). Contraction in the Z-axis direction can be taken into account before printing (a priori) and compensated for during preparation of the digital description of the printed object.

Note that sintering at a layer level, not only presents an easy way to get rid of the organics, but may also save the need of energy and time consuming following firing in oven

Techniques and features of layer-by-layer dispersant removal include the following:

### a. Heat

Extra heating of the new layer by focused radiation or by a high power flash light, e.g. both at Ir=5-10 KW/cm^2 can be used to accomplish evaporating of the disturbing materials (such as dispersant), and also heating the upper layer to as high temperature as required for sintering the layer. At the layer instant high temperature brought about by the intense radiation, not only the carrier liquid is evaporated, but also the dispersant evaporates or disintegrates and evaporates, and later full or sufficient sintering takes place. Usually this technique is done by dispensing the new layer on a moderately warm preceding layer, such that the carrier liquid is evaporated before entering the extra heating device, reducing thereby the required energy in the device for evaporating both the carrier liquid and the dispersant, and accomplishing sintering.

### b. By additional catalyst

Printing a layer can be accompanied by dispensing catalyst material, which accelerates sintering. A preferred embodiment includes material that disintegrates the dispersant molecules, so that they evaporate out or at least do not disturb sintering. Furthermore, added heat can be used to evaporate out the disintegrated molecules. The bare solid molecules left after removing the dispersant spontaneously sinter at this stage to each other, given that the temperature is high enough. For example, if the solid particles are silver particles of 20 nanometer diameter, a temperature as high as 200 °C is sufficient for complete sintering, given that the dispersant has removed. The catalyst can be dispensed after or just before dispensing the model layer.

Refer now to FIGURE 8A, a diagram of dispensing catalyst material. Dispensing the catalyst **802** can be done by a catalyst droplet jetting head **800** or by spray nozzle. The catalyst can be dispensed selectively according to the object layer image, or "blindly" on the entire reserved area for the object. The catalyst can come in liquid form or gas. Optionally, the catalyst can be dispensed by a roller that spreads the catalyst over or under the new layer being printed. When the catalyst has the quality of becoming aggressive (active) only at high temperature, the catalyst can be included in the ink beforehand, and then heated with the layer heating after printed, when activation is desired.

### 13. A different printing technique

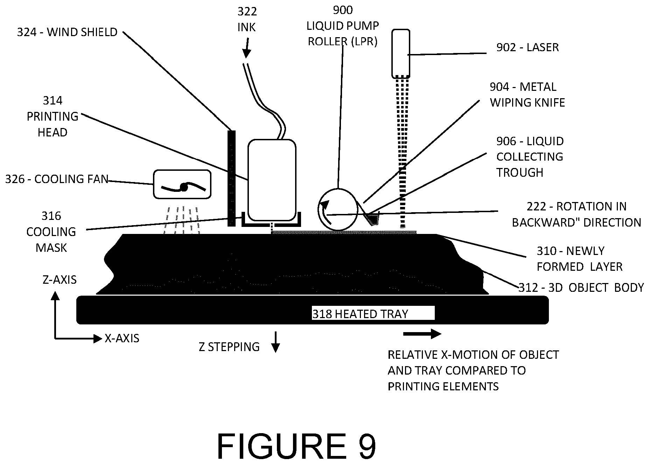

Refer now to FIGURE 9, a diagram of using a liquid pump roller. An alternative embodiment of printing, leveling, and heating, includes printing layer by layer while the temperature of the printed body is substantially smaller than the boiling temperature of the carrier liquid (e.g. 150 °C when the boiling temperature of the carrier liquid is 230 °C). After printing a layer, the layer is flattened (leveled) by a liquid pump roller (LPR) **900.** An LPR is typically a smooth roller with an axis parallel to Y-axis of the object, rotating in "reverse" (opposite the relative X-axis motion of the object). Then the newly formed layer **310** is irradiated by a high irradiation power beam (for example laser **902)** to at least evaporate the liquid and solidify the layer (e.g. warming the layer to a temperature of 230 °C or higher). Later on, before dispensing the next layer, the layer is cooled to the low object temperature (e.g. by a cooling fan **326).** The excess ink from the flattened layer attaches to the rotating roller surface of the LPR **900,** and is wiped by the roller wiper (for example by metal wiping knife **904),** and flows into a collecting trough **906,** from which the excess collected ink is cycled back to an ink tank for re-delivery to the printing head **314** or pumped out to a waste tank.

### 14. Protecting the jetting head and the jetted droplets

Printing a hot 3D object body presents difficulties when using an inkjet printing technique. The jetting nozzles are positioned close to the printed layer, e.g. 1 mm apart. Thus, the nozzles may heat up by the warm upper surface of the body being printed, and the jetting quality injured. Techniques to prevent nozzle heating may include a cooled shell (see FIGURE 3A, cooling mask **316)** that behaves as a thermal buffer between the hot layer and jetting nozzles. One such cooled shell is described in patent International publication No WO2010/134072 A1 to Xjet Solar Corporation.

Usually there is a desire to have the 3D body temperature (including the upper surface) not high (relatively low), because despite of the protecting mask, some heat still gets from the hot body of the object to the nozzle plate of the head through a slit in the mask through which the ink is jetted. Moreover, another difficulty with printing on hot objects lies in the possible "explosion" of the jetted droplets when touching the warm surface. In this case, the term "explosion" refers to the carrier liquid abruptly boiling rather than slowly evaporates.

An innovative solution is differentiation between the body (object) temperature and the temperature of the new layer. This can be accomplished by the following steps:
a. heating up the newly formed layer to a higher temperature than that of the body immediately after the layer being dispensed (e.g. by a focused radiation), and
b. cooling the upper surface before dispensing a new layer on the upper surface of the 3D body object. Cooling can be done with the aid of a fan (see FIGURE 3A cooling fan **326)** or by dissipating the heat stored in the layer to the object below and to the surrounding air.

### 15. Plural (composite) object material

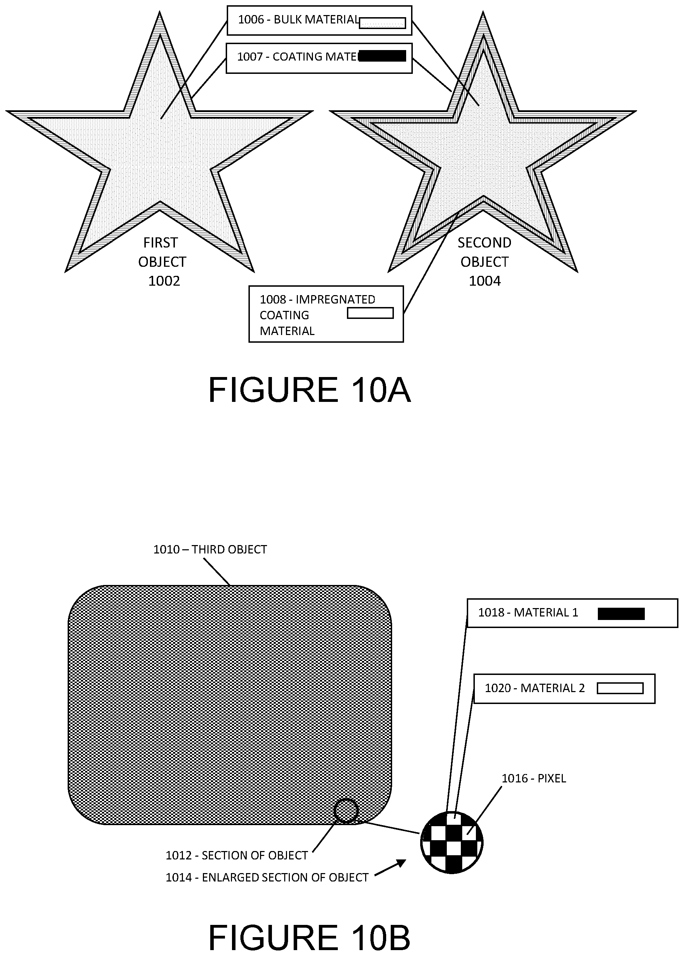

Refer now to FIGURE 10A, a diagram of objects built with different materials. Often the required object includes different materials in different parts of the object. A special and important case is when the bulk material **1006** of a first object **1002** should be laminated (coated) with a coating material **1007** at an outer surface of the first object **1002.** Similarly, the bulk material **1006** of a second object **1004** can be laminated with a coating material **1007** at an outer surface of the second object **1004.**

Refer now to FIGURE 10B, a diagram of objects built with a mix of materials. Requirements for a third object **1010** include a mix of two or more materials required either over the entire object or over part of the object. In the current diagram, third object **1010** includes a mix of a first material (material 1 **1018)** and a second material (material 2 **1020).** When a section of the object **1012** is enlarged **1014,** the mix of materials can be seen in that each pixel **1016** is an alternating material.

One technique for printing an object with a mix of materials in a given location of a layer can be done by dispensing one material in certain pixels of the layer and another material in other pixels.

In an alternate technique, one layer is printed by one material and another layer by another material. A special case is impregnation-like of a coating-like material **1008** at the outer surface of an object (for example, second object **1004).** The impregnation-like can include a gradual decrease of the proportion of impregnating material and bulk material as the distance from the object surface increases.

A plurality of inks and ink heads can be used to differentiate printing between object material and object support. According to an embodiment, one ink can be used to build both the object and support structures (layer by layer), while another ink is dispensed only on the layer part that belongs to only one of the object or support, introducing thereby a difference in a mechanical attribute of both materials. This difference is used later when the support is removed from the object. For example, a first ink including Ag particles is used to print both object and support portions of a layer. A second ink including Ag polymeric compound material or particles dispensed only in the object portion of the layer. When printing finishes, and after the printed complex has been fired in an oven, a substantial difference is introduced between both materials (the support of only Ag particles stays un-sintered, while the object is sintered or at least formed of a solid matrix of Ag in polymeric compound. This difference enables removing the support from the object.

### 16. Printing the object with a mold

In one embodiment, a mold is printed together with an object. A mold is any auxiliary body that is attached to the object body **312** and can be removed from the object body. In the context of this document, a mold can be considered support for the object, as described below. The mold can be printed by a different ink than the bulk in the same layer-by-layer printing. Printing an object and a mold facilitates the object including particles that do not adhere (are unattached or only lightly adhere) to each other until the body is fired and sintered in an oven (at typically 600 to 1500 °C) . For this sake, the mold preferably includes material that holds tight at a low temperature and disintegrates at high temperature, or at least can be removed from the object. The mold can also protect the object during printing. For example, the mold protects the delicate edges of the object **312** from breaking while the cutting roller **302** levels out the printed layer **310.** Even if the mold's material does not hold tighter (holds looser) than the object's material, yet the mold protects the object's edges while scarifying the mold's own edges through, for example, when leveling the new layer or transporting the object after printing to the firing oven. The mold can be thin (e.g.0.5 mm thick), and can get the shape of a skin around the object or part of the object. Thus, the object (and simultaneously the mold) can be printed embedded in a mold, expanding the range of materials and processed available for creation of 3D objects.

An example of this technique is an object ink that includes particles of high hardness (e.g. WC) wrapped with a dispersant. At relatively low temperature (e.g. 200-400 ° C), the dispersant behaves like a glue that holds the particles together. At medium temperature (e.g. 400 °C), however, the dispersant evaporates and the 3D object may fall into a pile of particles. If the object is surrounded with a material that partially sinters at 400 °C but melts or disintegrates and evaporates at above 800 °C (e.g. a mold ink including polymeric particles that evaporate at 800 °C), the mold stays solid at and above a medium temperature, allowing evaporation of the object's dispersant, until at higher temperature (e.g.700 °C) partial sintering of the object takes place.

### 17. Support

When an object is placed on a printing tray in an arbitrary orientation, a positive or negative angle can be specified per every spot on the object's surface, as follows: If an object material is found just under the spot, the surface angle is specified positive. Otherwise, the surface angle at that point is specified negative (a negative angle or negative tilt of the object). In other words, a negative angle is an area of an object that while being built lacks a portion of the object immediately beneath the area being printed.

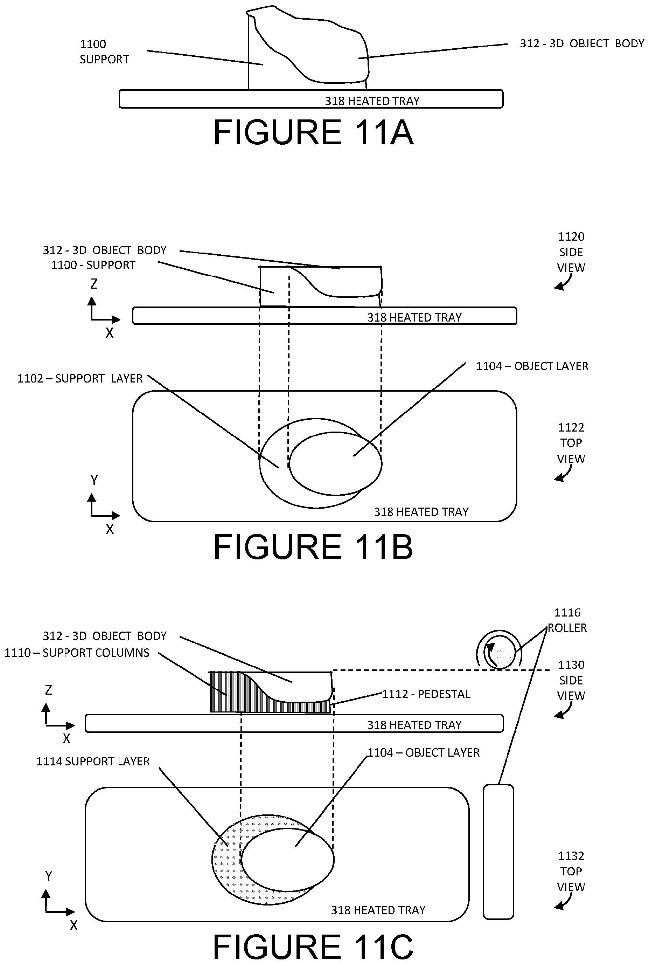

Refer now to FIGURE 11A, a diagram of support when building a 3D object. Supporting negative angles of the 3D object can be critical for 3D printing. The support **1100** material should differ from the object **312** material in a way that the support material can be removed after printing or after following steps like sintering, without deteriorating the object. The support may need to fulfill many additional requirements, including being easy to remove, hardly mixing with the model material at the touch interface line, low cost, self-sustained, and compatible with the printing technology (inkjet), etc.

Since printing is done by inkjet technology, the printer typically includes at least two printing nozzle groups (often two printing heads), one jetting object material, and one support material. Each layer being printed may have zero, one, or multiple portions of the layer that are desired in the final object, referred to as "object portions" of the (current) layer. Similarly, each layer may have zero, one, or multiple portions that are not desired (undesirable) in the final object, referred to as "support portions" of the (current) layer. The support portions are generally used as support, molds, or other structures to assist during production of the object, but are removed and/or lacking in the final object. As described above, other techniques can be used to print the object portion and support portion of the layer being printed (for example, for the object portion using a first ink and for the support portion using a combination of first and second inks). In the context of this document, the object portion of the layer being printed is sometimes referred to as the "object layer" and similarly the support portion of the layer being printed is sometimes referred to as the "support layer". In the context of this document, references to support can also include reference to the ink used to create the support (support ink) and to the portion adjacent to the object (that either supports the object in the gravitational sense, or surrounds the object for any purposed, including to serve as a mold) (support portion). For simplicity, the current description will use the current example of at least two printing heads. Based on this description, one skilled in the art will be able to apply the current methods to other implementations.

Refer now to FIGURE 11B, a diagram of printing support portions and object portions of layers. A side view **1120** shows the 3D object **312** and support **1100** during printing. A corresponding top view **1122** shows the upper layer. Each layer can include a support layer adjacent to an object layer. In this case, the upper layer includes a portion that is support layer **1102** (building support for subsequent object layers), and a portion that is object layer **1104** (built on top of preceding object and/or support layers).

According to a first embodiment, the support includes inorganic solid particles (e.g. high melting temperature particles like oxide, carbides, nitrides, metals, e.g. Tungsten) or organic particles (e.g. hard polymers) dispersed in a volatile carrier liquid. The polymeric material should be hard because otherwise the polymeric material can be difficult or not possible to grind (to micro particle size). After printing a support layer, the liquid carrier evaporates, leaving a solid laminate behind. When the object printing is finished, the object is supported or even wrapped by the support material. Considerations in choosing and preparing the inks take care of establishing a substantial difference in the adherence between the particles of the object (cohesiveness) and of the support. This difference can show up just after printing, or later after partial or complete firing. The difference can be a result of a difference in the dispersant attributes (e.g. different gluing characteristics between the solid particles), or a difference in the sintering tendency of the solid particles to each other. Typically, the support structure should be softer or more brittle or more miscible in water or solvents then the object, and therefore ready for being removed from the printed object. An ideal support is such that during firing the support disappears, e.g. by or disintegration and evaporation.

According to a second embodiment, the support includes solid material dissolved in a volatile liquid. After the liquid evaporation, a solid laminate is left behind to form a solid support.

According to a third embodiment, the solid support material after printing is soluble in a post treatment liquid. Thus, after completing printing the 3D object and support, the object and support can be immersed in the post treatment liquid such as water or light acid, to remove the support by dissolution.

According to a fourth embodiment, the solid support material is such that the solid support material evaporates or is burned during the firing process. An example is dissolved wax in an organic solvent, or dispersed particles of polymer in a dispersing liquid. The solvent or dispersing liquid evaporates off layer by layer during printing (at, for example, 200 °C) and the wax or polymer hardens. After printing, the object with the supporting body is fired in an oven, preferably in vacuum. At 550 °C, (for example) the wax evaporates and disappears, and the same thing with the polymer at 700 °C.

An example of the second and third embodiments is using salt (e.g. NaCl- Sodium Chloride, also known as table salt) solution in water. After the water evaporates, a solid support is left behind. After completion of printing, the object can be immersed in water and the salt is dissolved away.

Another example of support material is a dispersion of Zinc oxide (ZnO) particles dispersed in a solvent with the presence of an organic dispersant. After completion of printing and/ or firing, the dry ZnO particles can be removed by applying moderate force (in this example we suppose that the ZnO particles do not sinter to each other). Another option is immersing the object in strong acid (e.g. HNO3) and the Zinc dissolved away (ZnO+2HNO3 = Zn(NO3)2 +H2O).

An alternative of the former example is a mix of oxide particles and dissolved salt in a carrier liquid. After printing (when the support dries), the object and support are immersing in water or acid liquid, the salt is dissolved by the liquid and the oxide particles stay as a pile of loose dust.

Another example of support material is a dispersion of Silica (SiO2). Silica is a readily available and relatively inexpensive material. When the dispersion is dried, the remaining silica particles are only loosely attach to each other even after warming to 700 °C, and therefore the supporting body of Silica can be removed from the object.

An example of such a Silica dispersion is Aerodisp G1220 by EVONIK Industries, including SiO2 particle of an average diameter of 12 nm, dispersed in ethylene glycol and Degbe (Di-ethylene Glycol Butyl Ether) solvents.

Another example of support material is a dispersion of Calcium sulfate. Calcium sulfate is common material used for many applications such as gypsum board, plaster, and even as a food additive. Calcium sulfate is an inorganic salt that is water miscible, enabling removal of this support material by washing in water after printing and/ or firing. Calcium sulfate ink can be prepared by the following steps:
a. Solid Anhydrous Calcium sulfate (CaSO4) is grinded in an agitator mill in Glycol Ether solvent with a combination of ionic and acrylic dispersants to form a stable dispersion that passes a 3 µm mesh filtration.
b. The dispersion is further diluted by added Glycol Ether according to the required solid content of the ink.

### 18. Reinforced support and pedestal

Refer now to FIGURE 11C, a diagram of using reinforcing support columns. A side view **1130** shows the 3D object **312** and support columns **1110** during printing. A corresponding top view **1132** shows the upper layer. The view of the upper layer includes a portion that is support **1114** (building support for subsequent object layers), and a portion that is object layer **1104** (built on top of object and/or support layers). In cases where the support **1100** material does not stick well to the tray **318** below or to the object **312** above (and or below), reinforcement may be added, preferably by adding columns **1110** of object material.

In cases in which the object is attached too strongly to the tray, a pedestal **1112** including support can be added even under the lower surface of the object. In the context of this document, the pedestal can include all support layers (either reinforced or not) that are lower than the lower object layer. The pedestal **1112** can assist also obtaining proper and accurate Z-axis dimension of the 3D object. This is achieved at least in part by printing layers of support-pedestal to such a height (in Z-axis direction) wherein the leveling apparatus (such as roller **1116,** similar to leveling roller **302)** completely touches the pedestal **1112** and flattens the pedestal. Subsequently, printing of object and supporting material takes place on top of the leveled pedestal.

### 19. Complete (final) sintering in an oven

After completion of printing, the object is placed in an oven where the object is fired to the required temperature until complete sintering occurs. This final (complete) sintering stage can include the following steps:
Initial warming to burn out all organic material.
Further warming to liquidize inorganic additives (like Cobalt).
Final warming to sinter the particles in the liquid phase.

Part of the firing steps can include applying vacuum, applying pressure, adding inert gas to prevent oxidation, and adding other gases that may add desired molecular diffusion or chemical reaction with the body, as described elsewhere in this document.

### 20. High throughput

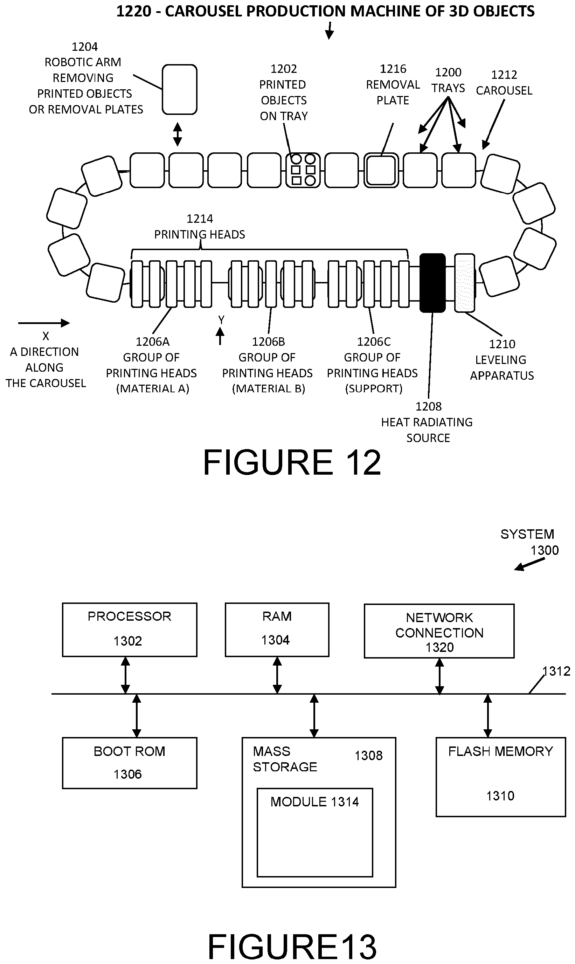

Refer now to FIGURE 12, a diagram of an exemplary carousel machine for production of 3D objects. 3D printing is typically characterized by low output because each object is typically constructed from thousands of printed layers. A plurality of trays **1200** of a carousel production machine for 3D objects **1220** can be used to increase the production throughput of 3D objects (such as 3D object **312)**

According to an embodiment, a 3D production machine **1220** will preferably include a plurality of printing (preferably inkjet) heads **1214** and a plurality of trays **1200** so as to enable production of many objects in the same run by many printing (jetting) heads. Multiple printing heads can be grouped into a group of printing heads **(1206A, 1206B, 1206C).** Many and different parts (exemplary 3D objects **1202)** may be printed on each tray. Every object passes multiple times (cycles) through the printing section (under the printing heads), wherein each time adds one or a few layers. As each object is typically constructed from thousands of printed layers, typically thousands of cycles are necessary. In a case where each cycle includes multiple printings from a plurality of printing heads, the number of cycles can be reduced from thousands to hundreds or less. Based on this description, one skilled in the art will be able to determine how many heads and cycles and trays **1200** are necessary for constructing specific plurality of objects.

The plurality of heads is arranged in the Y-axis direction and are shifted in Y direction from each other so that respective nozzles of the plurality of heads are staggered to fill completely a layer's surface in one pass. More printing heads than required for filling one layer can be used, e.g. to print more than one layer in a pass. Heads for different building material can be employed. For example, a first group of printing heads **1206A** is configured for printing a first material (material A) and a second group of printing heads **1206B** is configured for printing a second material (material B). Heads for support material can be employed. For example, a third group of printing heads **1206C** configured for printing support material. Optionally, a heat-radiating source **1208** (such as radiation source **308)** from above the printed layers follows the deposition of the layer(s) in a pass (i.e. a cycle). Additionally and optionally, a leveling apparatus **1210** (for example, leveling roller **302)** can be included in the carousel's cycle, typically after the printing heads.

When an object is finished printing, a robotic arm **1204** can remove the completed tray **1200** from the carousel **1212** or remove object(s) **1202** from a tray **1200,** and send the object to further production steps (e.g. firing) without stopping the carousel rotation. Note that from layer to layer each tray shifts a little lower in Z direction, so as the last printed layer is brought to the height appropriate for the leveling apparatus to shave the upper surface of the dried layer. In a preferred case where the tray **1200** stays on the carousel **1212,** when all parts from a tray have been removed, the tray Z level (height) is controlled to an initial position, and the machine would start printing a succeeding group of parts.

An alternative implementation is to initially load a removal plate **1216** on each tray **1200,** on which the one or more objects **1202** are later printed. In this case, the tray **1200** is fixed to the carousel and is referred to as a "chuck" which holds the removal plate **1216.** When all the objects **1202** on the plate **1216** are printed, the robotic arm **1204** removes the removal plate **1216** and sends the removal plate with the objects on the removal plate to a follow-on stage, such as the firing stage. The removal plate may include a thin metal plate, or, if a temperature higher than typically 900 °C is used in the firing stage, a carbon plate. The plate may be held on the chuck by a vacuum force or by holding "fingers" around the plate.

The portion of the carousel **1212** track under the printing heads **1214** should preferably be straight. The heads should move in Y-axis direction once a carousel cycle to perform "nozzle scatter". As described elsewhere in this document, the trays **1200** are warmed according to the required temperature during printing and the printing heads **1214** are protected from the tray heat and fumes.

### 21. System controller

FIGURE 13 is a high-level partial block diagram of an exemplary system **1300** configured to implement a controller for the present invention. System (processing system) **1300** includes a processor **1302** (one or more) and four exemplary memory devices: a RAM **1304,** a boot ROM **1306,** a mass storage device (hard disk) **1308,** and a flash memory **1310,** all communicating via a common bus **1312.** As is known in the art, processing and memory can include any computer readable medium storing software and/or firmware and/or any hardware element(s) including but not limited to field programmable logic array (FPLA) element(s), hard-wired logic element(s), field programmable gate array (FPGA) element(s), and application-specific integrated circuit (ASIC) element(s). Any instruction set architecture may be used in processor **1302** including but not limited to reduced instruction set computer (RISC) architecture and/or complex instruction set computer (CISC) architecture. A module (processing module) **1314** is shown on mass storage **1308,** but as will be obvious to one skilled in the art, could be located on any of the memory devices.

Mass storage device **1308** is a non-limiting example of a computer-readable storage medium bearing computer-readable code for implementing the methods described herein. Other examples of such computer-readable storage media include read-only memories such as CDs bearing such code.

System **1300** may have an operating system stored on the memory devices, the ROM may include boot code for the system, and the processor may be configured for executing the boot code to load the operating system to RAM **1304,** executing the operating system to copy computer-readable code to RAM **1304** and execute the code.

Network connection **1320** provides communications to and from system **1300.** Typically, a single network connection provides one or more links, including virtual connections, to other devices on local and/or remote networks. Alternatively, system **1300** can include more than one network connection (not shown), each network connection providing one or more links to other devices and/or networks.

System **1300** can be implemented as a server or client respectively connected through a network to a client or server. Alternatively, system **1300** can be implemented as an embedded controller.

### OPERATION - FIRST EMBODIMENT

The principles and operation of a first embodiment may be better understood with reference to the drawings and the accompanying description. A present embodiment is a method for printing an object. The method facilitates evaporating a carrier liquid during printing while at least a portion of dispersant remains in the printed layer.

While conventional implementations may heat an object body after printing to evaporate the carrier, a feature of the current embodiment is bringing or maintaining the temperature (TL) of the (most recently / current) printed layer (upper surface of the body of the object) near or above the boiling point of the carrier T1 (e.g. above 0.7xT1 in Celsius) and simultaneously below the boiling point of the dispersant. A result of this innovative feature is that the carrier liquid evaporates as the ink is printing, in contrast to conventional techniques of evaporating the carrier after printing, while at least a portion of the dispersant remains in the printed layer of the object. In some cases, the remaining dispersant serves to bind the solid particles together after the carrier liquid is evaporated. Alternatively, other materials can be added to the ink to assist in binding of the solid particles together after the carrier liquid evaporates.

One skilled in the art will realize that for a given object (and associated ink, carrier liquid, dispersant, and other optional components) there is a pre-defined (determined/calculated) range of temperatures above a **lower-bound ([T1]) of the carrier boiling point temperature** and below an **upper-bound ([T2]) of the dispersant boiling point temperature** ([T1] < TL < [T2]), and wherein bringing to, or maintaining a, temperature of the upper layer (TL) in this pre-defined range of temperatures enables evaporating the carrier while the dispersant remains in the current layer being printed. In other words, in reality, the exact carrier boiling point temperature T1 does not have to be used, but rather there is a known range even below the carrier boiling point temperature T1 in which the carrier will evaporate. This range below the carrier boiling point temperature T1 is referred to in this document as a lower-bound ([T1]) of the carrier boiling point temperature. Similarly, an exact dispersant boiling point temperature T2 does not have to be used, but rather there is a known range around the dispersant boiling point temperature T2 in which the dispersant will not evaporate (remains liquid). This range around the dispersant boiling point temperature T2 is referred to in this document as an upper-bound ([T2]) of the dispersant boiling point temperature. The lower-bound and upper-bound are typically 20% more or less than the respective boiling point temperatures (typically measured in degrees Kelvin). The lower-bound ([T1]) can be 20% less than the carrier boiling point temperature (T1) typically measured in degrees Kelvin. The upper-bound ([T2]) can be 20% more or less than the dispersant boiling point temperature (T2) typically measured in degrees Kelvin.

A first layer is printed on a printing surface of the object. The object part of the first layer is printed with at least one ink, typically from at least one corresponding inkjet printing head. One or more of the printing heads, typically all of the printing heads, can be modulated according to a content of the first layer. Each of the at least one inks typically include a carrier having a carrier boiling point temperature (T1), a dispersant having a dispersant boiling point temperature (T2) and particles having a particle sintering temperature (T3). When at least two inks are printed, each of the at least two inks can include particles of different types, and a local proportion of each of the at last two inks is determined by the specification for the layer being printed (first layer's specification). Typically, the local proportion of each of the inks varies from one printed layer to another printed layer, and from one point in a layer to another point in the same layer. When the layer also includes a support portion, the support is printed adjacent to the object layer, as described below.

As described elsewhere in this document, the dispersant can be chosen to additionally and/or alternatively bind the particles to each other after the carrier is evaporated and/or inhibit sintering of the particles to each other after the carrier is evaporated.

A feature of inkjet printing is that the printing can be selective, in other words, printing to areas that are part of each layer being printed (such as the first layer of the object). Each layer is typically printed based on a layer specification or layer content (description) including information on what portion of the current layer is the desired object. Optionally, the layer specification can include information on areas of the current layer not to be printed (to remain un-printed), to be printed with an alternate ink (second ink, third ink, etc.), support areas, and/or mold areas.

As described elsewhere in this document, bringing to or maintaining a temperature of the upper layer (TL) can be achieved via techniques such as use of a radiation source such as a heating lamp, an electro-magnetic (EM) radiation source above the object, a selective or non-selective laser, a focused linear laser beam, a scanned laser beam, a scanned focused pencil laser beam, focused light from a linear incandescent bulb, focused light from a gas discharge lamp bulb, a flash light, an ultra-violet (UV) light source, a visible light source, an infra-red (IR) light source, and substrate (tray) temperature control. In a case where a scanned laser beam is used, the beam can be modulated according to the content of the layer (information on what portion of the current layer is the desired object).

In a case where printing is selective, printing to areas that are part of the first layer of the object, then after selective printing a non-selective laser can be used to irradiate an entire area on which the object is being printed (for example, using a line focused laser). This technique of selective printing followed by non-selective use of a heating source, in particular using a non-selective laser, can be used for heating the upper surface. In contrast, conventional techniques use non-selective printing (or simply providing to the printing area an ink or other substance from which to construct the 3D object) followed by a selective laser to sinter desired portions of the object.

A subsequent layer ise printed on top of the first layer after evaporating the carrier. Typically, an object is built from hundreds or thousands of printed layers, so the method repeats by printing a subsequent layer (as a new "first layer") on top of the previously printed (first) layer.

As described elsewhere in this document, a catalyst can be added to the layer being printed (first layer). Catalysts can be selected from compounds such as halides and copper chloride. The catalyst can be added by a variety of techniques, for example:
including the catalyst in at least one of the inks;
jetting the catalyst in gaseous form from above the first layer;
jetting the catalyst in liquid form from above the first layer;
spraying the catalyst in gaseous form from above the first layer; and
spraying the catalyst in liquid form from above the first layer.

The object is typically printed on a tray that is heated or made of thermal isolation material.

In a case where the temperature of the upper surface TS is kept above the carrier boiling temperature T1, (e.g. 30 °C higher than T1) the liquid carrier in the newly dispensed layer abruptly boils (explodes like) when the ink lands on the upper surface, creating a sponge like layer including open plenty tiny inflations. This is because during the abrupt boiling, tiny segments of the dispensed ink inflate (by the carrier gas) and freeze (i.e. become dry), just before the gas makes an opening and "flies" out. The resulting structure of the 3D object body is thus porous. Creating a porous object body may be desirable to allow the remaining dispersant to flow out of the structure of the object during subsequent heating in an oven. Subsequent heating is used to remove (disintegrate and/or evaporate) remaining dispersant and/or other ink components such as organic material.

### OPERATION - SECOND EMBODIMENT (NOT ACCORDING TO THE INVENTION)

The principles and operation of a second embodiment (not according to the invention) may be better understood with reference to the drawings and the accompanying description. A present embodiment is a system and method for printing an object. The system facilitates evaporating dispersant in a first layer prior to sintering the first layer and/or prior to printing a second layer.

As described elsewhere in this document, conventional implementations leave dispersant in a completed object, and after printing the entire object then heat the entire object to fire-off (evaporate) a portion of the dispersant. A feature of the current embodiment is evaporating at least a portion of the dispersant during printing. In general, a method for printing an object starts with printing a first layer of at least one ink then evaporating at least a portion of the dispersant, typically substantially all the dispersant. After evaporating at least a portion of the dispersant, a subsequent operation is performed. Subsequent operations include:
at least partially sintering the first layer, and
repeating printing a subsequent layer of the at least one ink on the first layer.

Optionally, prior to evaporating at least a portion of the dispersant, the carrier can be evaporated while the dispersant remains in the first layer.

In general, the techniques and options discussed above, in particular in reference to the first embodiment, can also be implemented for this second embodiment.

### OPERATION - THIRD EMBODIMENT - FIGURES 2A TO 3

The principles and operation of a third embodiment may be better understood with reference to the drawings and the accompanying description. A present embodiment is a system and method for printing an object. The system facilitates leveling an upper-layer of a printed object using a horizontal roller.

As described elsewhere in this document, printing can result in an upper-layer (most recently printed / first layer) that is not sufficiently flat (too rough) for subsequent processing. In this case, leveling the top of the object is desired. Conventional implementations use vertical milling or grinding disks rotating about vertical beam, or smooth or knurled rollers. In the current embodiment, an innovative horizontal roller is used. In an optional embodiment, the horizontal roller is a cutting (bladed) roller.

Generally, a method for printing an object starts with printing a first layer of at least one ink and then at least partially hardening the first layer. Then the first layer is leveled using an innovative horizontal roller. The horizontal roller can include one or more blades (or alternatively a cylindrical grinding surface) and rotation generally about an axis parallel to a plane of the first layer (typically the Y-axis).

Additions, options, and alternatives for the current embodiment are described in the above section "leveling apparatus". After leveling and optionally: cleaning, further hardening, evaporating at least a portion of the dispersant, and/or partial sintering, if the object is not yet complete (incomplete) a subsequent layer of at least one ink is printed on the first layer.

### OPERATION - FOURTH EMBODIMENT - FIGURES 10A to 11C (NOT ACCORDING TO THE INVENTION)

The principles and operation of a fourth embodiment (not according to the invention) may be better understood with reference to the drawings and the accompanying description. A present embodiment is a system and method for printing an object with support. The system facilitates repeatedly printing layers according to a map, each layer with potentially both object and support portions, resulting in an object with support. In particular, support for negative angles and molds.

As described elsewhere in this document, techniques for using support can facilitate using molds, support for negative angles, using reinforced support, and pedestals.

The object portion of the layer is printed with object ink, generally referred to as a first ink. Similarly, the support portion of the object is printed with support ink, generally referred to as a second ink.

Generally, a method for printing an object with support starts with printing an object portion of a first layer using at least a first ink, the first ink including:
a first carrier; and
first particles used to construct the object and dispersed in the first carrier.

A support portion of the first layer using at least a second ink is printed prior to, simultaneously with, or after the object portion is printed. The second ink includes:
a second carrier; and
second particles used to construct the support and dispersed in the second carrier.

Preferably, the second carrier is the first carrier. Typically, the second particles are other than the first particles and the carriers are liquids.

As described above, the support portion can be printed with the second ink and additionally with the first ink. In other words, typically printing both the object and support portions with the first ink and then (or simultaneously) re-printing only the support portions with the second ink.

In a preferred embodiment, printing is via at least a first printing head, typically two or more printing heads, each printing head jetting one type of ink and each printing head modulated according to a content (object, support, and empty portions) of the first layer.

After printing a first layer, if the object is not complete (incomplete), a subsequent layer is printed on the first layer, the subsequent layer including respective object and support portions on the first layer.

The solid particles in the support ink can include particles that are: miscible in water; at least partially soluble in water, inorganic solid, organic, polymer, particles having a hardness less than the hardness of the first particles, salt, metal oxides (e.g. Zinc oxide), Silica (SiO2), Calcium sulfate, and tungsten carbide (WC).

As discussed elsewhere in this document, the particles used in the object and support portions depend on the specific application, requirements, and object properties. Particles used can include metal, metal oxides, metal carbides, metal alloys, inorganic salts, polymeric particles, Polyolefin, and Polyolefin poly (4-methyl 1-pentene).

When printing of the object with support is complete, the support must be removed from the object either just after printing or after subsequent processing in an oven. The support can be removed from the object using various techniques, the specific technique depending on the type of support. Techniques include firing, immersing to dissolve the support, immersing in water to dissolve the support, immersing in acid to dissolve the support, immersing in a light acid, immersing in a strong acid, immersing in HNO3, sand blasting, water jetting, etc.

It is foreseen that the described methods can be used in other areas. For example, constructing objects that are generally (informally) call two-dimensional (2D). Non-limiting examples include flexible metal or composite antennas and biological sensors. 2D objects may be composed of a single layer, or relatively few layers. In these cases, the 2D object may have similar requirements as construction of a 3D object. For example, where an ink being used to print a 2D object includes a dispersant for printing but the dispersant must be removed in the completed object.

Note that the inks referred to in the current description are commercially available conventional inks. It is foreseen that alternative, additional, and new inks can be used with the current invention.

## Claims

1. A method for printing an object comprising the steps of:
(a) printing a first layer of at least one ink, each of said at least one ink including:
(i) a liquid carrier having a carrier boiling point temperature (T1);
(ii) a dispersant having a dispersant boiling point temperature (T2); and
(iii) particles having a particle sintering temperature (T3),
(b) while maintaining a temperature of said first layer (TL) in a pre-defined range of temperatures via use of an electro-magnetic (EM) radiation source above the object, wherein said pre-defined range of temperatures is above a lower-bound ([T1]) of said carrier boiling point temperature and below an upper-bound ([T2]) of said dispersant boiling point temperature ([T1] < TL< [T2]), thus evaporating said carrier while said dispersant remains in said first layer, and wherein the first layer is flattened with a leveling apparatus after said carrier has evaporated,
(c) printing a subsequent layer of said at least one ink on said first layer of at least one ink,
(d) building the object by repeating steps (a) to (c),
(e) after steps (a)-(d), heating the object in an oven to evaporate organic material,
(f) after step (e), heating the object to a further elevated temperature where full sintering occurs.

2. The method of claim 1, wherein the dispersant boiling point temperature is the temperature of dispersant burn out, wherein the dispersant undergoes disintegration and evaporation.

3. The method of claim 1 wherein said printing is via at least one printing head jetting said at least one ink.

4. The method of claim 1 wherein said particles are a material used to construct the object and dispersed in said carrier liquid; and said dispersant is dissolved in said carrier liquid, adheres to said particles' surface, and inhibits agglomeration of said particles to each other.

5. The method of claim 1 wherein the object is printed on a tray made of a thermal isolation material.

6. The method of claim 1 wherein said lower-bound ([T1]) includes 20% less than the carrier boiling point temperature (T1) in degrees Kelvin.

7. The method of claim 1, wherein said upper-bound ([T2)] includes 20% more or less than the dispersant boiling temperature (T2) in degrees Kelvin.

8. The method of claim 1 wherein printing is selective, printing to areas that are part of said first layer of the object and said EM radiation source is non-selective, irradiating an entire area on which the object is being printed.

9. The method of claim 1 wherein the EM radiation source is a lamp.

10. The method of claim 8, wherein the lamp has a lamp housing that includes a metal envelope comprising an insulation material to prevent heating adjacent elements.

11. The method of claim 8, wherein the lamp is a radiating lamp including a linear bulb, including a linear radiating filament enclosed in a quartz transparent pipe, coupled with a reflective surface enclosed in a transparent window.

12. The method of claim 1, wherein the dispersant separates the particles from each other in the ink dispersion but also attaches the particles to each other when the carrier liquid is removed.

13. The method of claim 1, wherein the particles are chosen from metals, metal oxides, oxides, metal carbides, metal alloys, inorganic salts and polymeric particles, and the particles are of 0.5 to 50 micrometer size or 5 to 500 nanometer size.

14. The method of claim 1, wherein the final concentration of dispersant in the object is less than 0.1%.

15. The method of claim 1, wherein the leveling apparatus is a horizontal grinding roller or cutting roller.

## Patentansprüche

1. Verfahren zum Drucken eines Objekts, umfassend die folgenden Schritte:
(a) Drucken einer ersten Schicht aus zumindest einer Tinte, wobei jede von der zumindest einen Tinte Folgendes beinhaltet:
(i) einen flüssigen Träger, der eine Trägersiedepunkttemperatur (T1) aufweist;
(ii) ein Dispergiermittel, das eine Dispergiermittel-Siedepunkttemperatur (T2) aufweist; und
(iii) Partikel, die eine Partikelsintertemperatur (T3) aufweisen,
(b) während eine Temperatur der ersten Schicht (TL) in einer vordefinierten Spanne an Temperaturen unter Verwendung einer elektromagnetischen (EM) Strahlungsquelle über dem Objekt gehalten wird, wobei die vordefinierte Spanne an Temperaturen über einer Untergrenze ([T1]) der Trägersiedepunkttemperatur und unter einer Obergrenze ([T2]) der Dispergiermittel-Siedepunkttemperatur ist ([T1] < TL < [T2]), wodurch der Träger verdampft wird, während das Dispergiermittel in der ersten Schicht bleibt, und wobei die erste Schicht mit einer Nivelliervorrichtung geglättet wird, nachdem der Träger verdampft ist,
(c) Drucken einer nachfolgenden Schicht aus der zumindest einer Tinte auf die erste Schicht aus der zumindest einer Tinte,
(d) Bauen des Objekts durch Wiederholen der Schritte (a) bis (c),
(e) nach Schritt (a)-(d) Erhitzen des Objekts in einem Ofen, um organisches Material zu verdampfen,
(f) nach Schritt (e) Erhitzen des Objekts auf eine weiter erhöhte Temperatur, bei der vollständiges Sintern stattfindet.

2. Verfahren nach Anspruch 1, wobei die Dispergiermittel-Siedepunkttemperatur die Temperatur von Dispergiermittelausbrennen ist, wobei das Dispergiermittel Zerfall und Verdampfung erlebt.

3. Verfahren nach Anspruch 1, wobei das Drucken über zumindest einen Druckkopf ist, der die zumindest eine Tinte ausstößt.

4. Verfahren nach Anspruch 1, wobei die Partikel ein Material sind, das verwendet wird, um das Objekt aufzubauen und in der Trägerflüssigkeit dispergiert sind; und das Dispergiermittel in der Trägerflüssigkeit aufgelöst wird, an der Oberfläche der Partikel haftet und Agglomeration der Partikel aneinander hemmt.

5. Verfahren nach Anspruch 1, wobei das Objekt auf eine Schale gedruckt wird, die aus einem thermisch isolierenden Material hergestellt ist.

6. Verfahren nach Anspruch 1, wobei die Untergrenze ([T1]) 20 % weniger als die Trägersiedepunkttemperatur (T1) in Grad Kelvin beinhaltet.

7. Verfahren nach Anspruch 1, wobei die Obergrenze ([T2)] 20 % mehr oder weniger als die Dispergiermittel-Siedetemperatur (T2) in Grad Kelvin beinhaltet.

8. Verfahren nach Anspruch 1, wobei das Drucken selektiv ist, wobei auf Bereiche gedruckt wird, die Teil der ersten Schicht des Objekts sind, und die EM-Strahlungsquelle nicht selektiv ist, einen gesamten Bereich bestrahlt, auf dem das Objekt gedruckt wird.

9. Verfahren nach Anspruch 1, wobei die EM-Strahlungsquelle eine Lampe ist.

10. Verfahren nach Anspruch 8, wobei die Lampe ein Lampengehäuse aufweist, das eine Metallhülle beinhaltet, die ein Isoliermaterial umfasst, um Erhitzen von benachbarten Elementen zu verhindern.

11. Verfahren nach Anspruch 8, wobei die Lampe eine Strahlungslampe ist, die einen linearen Kolben beinhaltet, der einen linearen Strahlungsfaden beinhaltet, der in einem transparenten Quarzrohr eingeschlossen ist, gekoppelt mit einer reflektierenden Oberfläche, die in einem transparenten Fenster eingeschlossen ist.

12. Verfahren nach Anspruch 1, wobei das Dispergiermittel die Partikel in der Tintendispersion voneinander trennt, aber auch die Partikel aneinander bindet, wenn die Trägerflüssigkeit entfernt wird.

13. Verfahren nach Anspruch 1, wobei die Partikel aus Metallen, Metalloxiden, Oxiden, Metallcarbiden, Metalllegierungen, anorganischen Salzen und Polymerpartikeln ausgewählt sind und die Partikel von einer Größe von 0,5 bis 50 Mikrometer oder einer Größe von 5 bis 500 Nanometer sind.

14. Verfahren nach Anspruch 1, wobei die Endkonzentration des Dispergiermittels in dem Objekt weniger als 0,1 % ist.

15. Verfahren nach Anspruch 1, wobei die Nivelliervorrichtung eine horizontale Schleifwalze oder Schneidwalze ist.

## Revendications

1. Procédé permettant l'impression d'un objet comprenant les étapes de :
(a) impression d'une première couche d'au moins une encre, chacune de ladite au moins une encre comprenant :
(i) un support liquide possédant une température de point d'ébullition de support (T1) ;
(ii) un dispersant possédant une température de point d'ébullition de dispersant (T2) ; et
(iii) des particules possédant une température de frittage de particules (T3),
(b) tout en maintenant une température de ladite première couche (TL) dans une plage prédéfinie de températures par l'intermédiaire de l'utilisation d'une source de rayonnement électromagnétique (EM) au-dessus de l'objet, ladite plage prédéfinie de températures étant au-dessus d'une limite inférieure ([T1]) de ladite température de point d'ébullition de support et en dessous d'une limite supérieure ([T2]) de ladite température de point d'ébullition de dispersant ([T1] < TL < [T2]), évaporant ainsi ledit support pendant que ledit dispersant reste dans ladite première couche, et ladite première couche étant aplatie avec un appareil de nivellement après que ledit support s'est évaporé,
(c) impression d'une couche suivante de ladite au moins une encre sur ladite première couche d'au moins une encre,
(d) construction de l'objet en répétant les étapes (a) à (c),
(e) après les étapes (a) à (d), chauffage de l'objet dans un four pour évaporer la matière organique,
(f) après l'étape (e), chauffage de l'objet à une température encore plus élevée à laquelle se produit un frittage complet.

2. Procédé selon la revendication 1, ladite température de point d'ébullition de dispersant étant la température de combustion de dispersant, ledit dispersant subissant une désintégration et une évaporation.

3. Procédé selon la revendication 1, ladite impression se produisant par l'intermédiaire d'au moins une tête d'impression projetant ladite au moins une encre.

4. Procédé selon la revendication 1, lesdites particules étant un matériau utilisé pour construire l'objet et dispersé dans ledit liquide de support ; et ledit dispersant étant dissous dans ledit liquide de support, adhérant à la surface desdites particules et inhibant l'agglomération desdites particules les unes aux autres.

5. Procédé selon la revendication 1, ledit objet étant imprimé sur un plateau constitué d'un matériau d'isolation thermique.

6. Procédé selon la revendication 1, ladite limite inférieure ([T1]) comprenant 20 % de moins que la température de point d'ébullition de support (T1) en degrés Kelvin.

7. Procédé selon la revendication 1, ladite limite supérieure ([T2)] comprenant 20 % de plus ou de moins que la température d'ébullition de dispersant (T2) en degrés Kelvin.

8. Procédé selon la revendication 1, ladite impression étant sélective, imprimant sur des zones qui font partie de ladite première couche de l'objet et ladite source de rayonnement EM étant non sélective, irradiant une zone entière sur laquelle l'objet est imprimé.

9. Procédé selon la revendication 1, ladite source de rayonnement EM étant une lampe.

10. Procédé selon la revendication 8, ladite lampe possédant un boîtier de lampe qui comprend une enveloppe métallique comprenant un matériau isolant pour empêcher le chauffage des éléments adjacents.

11. Procédé selon la revendication 8, ladite lampe étant une lampe rayonnante comprenant une ampoule linéaire, comprenant un filament rayonnant linéaire enfermé dans un tuyau transparent en quartz, couplé à une surface réfléchissante enfermée dans une fenêtre transparente.

12. Procédé selon la revendication 1, ledit dispersant séparant les particules les unes des autres dans la dispersion d'encre mais fixant également les particules les unes aux autres lorsque le liquide de support est retiré.

13. Procédé selon la revendication 1, lesdites particules étant choisies parmi les métaux, les oxydes métalliques, les oxydes, les carbures métalliques, les alliages métalliques, les sels inorganiques et les particules polymères, et lesdites particules possédant une taille de 0,5 à 50 micromètres ou de 5 à 500 nanomètres.

14. Procédé selon la revendication 1, ladite concentration finale de dispersant dans l'objet étant inférieure à 0,1 %.

15. Procédé selon la revendication 1, ledit appareil de nivellement étant un rouleau de meulage horizontal ou un rouleau de coupe.
